# FASCICULE DE BREVET EUROPEEN

(11) **EP 2 625 563 B1**
(45) Date de publication et mention de la délivrance du brevet: **28.12.2016**
(21) Numéro de dépôt: 11779792.8
(22) Date de dépôt: 04.10.2011
(51) Int. Cl.: G02F 1/13, G02F 1/1334, B32B 17/10

(54) **VITRAGE MULTIPLE À DIFFUSION VARIABLE PAR CRISTAUX LIQUIDES, SON PROCÉDÉ DE FABRICATION**
MEHRFACHVERGLASUNG MIT VARIABLER DIFFUSION DURCH FLÜSSIGKRISTALLE UND HERSTELLUNGSVERFAHREN DAFÜR
MULTIPLE GLAZING HAVING VARIABLE DIFFUSION BY LIQUID CRYSTALS, AND METHOD FOR MANUFACTURING SAME

(30) Priorité: 04.10.2010 FR 1058004
(43) Date de publication de la demande: 14.08.2013
(73) Titulaire: Saint-Gobain Glass France, 92400 Courbevoie (FR)
(72) Inventeur: POIX, René, F-60400 Noyon (FR); BOUNY, Elodie, F-23000 Gueret (FR); ZHANG, Jingwei, F-91300 Massy (FR)
(74) Mandataire: Saint-Gobain Recherche
(86) Numéro de dépôt international: PCT/FR2011/052311
(87) Numéro de publication internationale: WO 2012/045973

(56) Documents cités:
- EP-A1- 0 575 207
- EP-A1- 2 093 051
- EP-A1- 2 128 688
- EP-A2- 0 835 743
- DE-A1- 3 402 518
- GB-A- 2 296 479
- US-A- 5 142 644

## Description

L'invention se rapporte au domaine des vitrages électrocommandables à propriétés optiques variables et plus particulièrement concerne un vitrage multiple à diffusion variable par cristaux liquides, doté d'une couche de cristaux liquides entre deux verres et alternant de manière réversible par application d'un champ électrique alternatif entre un état transparent et un état translucide.

On connaît des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

Le vitrage électrocommandable à cristaux liquides peut être utilisé partout, tant dans le secteur de la construction que dans le secteur de l'automobile, chaque fois que la vue à travers le vitrage doit être empêchée à des moments donnés.

Le document WO9805998 divulgue un vitrage multiple à cristaux liquides comportant:
- deux feuilles de verre (« float » en anglais) d'1 m² et épaisses de 6 mm scellées sur le bord de leurs faces internes par un joint adhésif de scellement en résine époxy,
- deux électrodes en couches électriquement conductrices à base de SnO2: F directement sur les faces internes de verre,
- directement sur les électrodes, une couche de cristaux liquides à base de PSCT (« Polymer Stabilized Cholesteric Texture» en anglais) de 15 µm, incorporant des espaceurs sous forme de billes de verre.

Lors de l'assemblage, les deux feuilles de verres sont décalées laissant des bords opposés d'électrodes saillants afin de faciliter l'application des bandes de cuivre adhésivées pour distribuer le courant aux électrodes.

Un système de connexion électrique pour un dispositif à cristaux liquides dispersés dans une matrice est également dévoilé dans le document US5,142,644. On connait aussi un vitrage électrochrome adapté à une configuration bâtiment comprenant 3 feuilles de verre, deux d'entre elles étant feuilletées de façon à créer une gorge (EP0575207 A1). Enfin un dispositif de câblage pour feuilles de verre feuilletées est mentionné dans DE3402518 A1.

On constate toute fois que ce vitrage multiple à cristaux liquides est fragile.

La présente invention a pour but d'améliorer la robustesse et la fiabilité du vitrage à diffusion variable par cristaux liquides, à moindre coût, de façon simple et à long terme.

A cet effet, la présente invention propose un vitrage multiple à diffusion variable par cristaux liquides, avec un chant, vitrage présentant:
- une première feuille de verre avec une face (principale) dite première face interne et une autre face (principale) dite première face externe (opposée à la face interne) et une tranche dite première tranche,
- une deuxième feuille de verre avec une face (principale) dite deuxième face interne et une autre face (principale) dite deuxième face externe (opposée à la face interne) et une tranche dite deuxième tranche,
les première et deuxième feuilles de verre, notamment flottées étant scellées (en bordure de leurs faces internes) par un joint de scellement (périphérique),
- des première et deuxième électrodes respectivement sur les première et deuxième faces internes, sous forme de couches électriquement conductrices transparentes, première et deuxième électrodes dotées respectivement de première et deuxième zones d'alimentation électrique,
- et, sur les première et deuxième électrodes, une couche de cristaux liquides alternant de manière réversible entre un état transparent et un état translucide par application d'un champ électrique alternatif, couche d'une épaisseur comprise entre 15 et 60 µm en incluant ces valeurs et incorporant des espaceurs, de préférence sphériques, transparents, notamment en plastique voire en verre,
- la première feuille de verre dépassant d'un bord de la deuxième tranche, par un premier bord (principal) de la première face interne, dit premier bord dépassant, et comportant la première zone d'alimentation électrique,
- un câblage électrique avec une première entrée de câblage qui est l'âme d'un premier câble, donc une zone de câble sans gaine, dans la première zone d'alimentation électrique et une deuxième entrée de câblage qui est l'âme d'un câble, donc une zone de câble sans gaine, dans la deuxième zone d'alimentation électrique,
- une première matière d'isolation électrique isolant électriquement la première entrée de câblage, polymérique, et éventuellement une deuxième matière d'isolation électrique isolant électriquement la deuxième entrée de câblage, polymérique, identique ou distincte de la première,
- une troisième feuille de verre feuilletée par la deuxième face externe avec la deuxième feuille de verre par un premier intercalaire de feuilletage en une première matière intercalaire polymérique transparente, la troisième feuille de verre (et éventuellement le premier intercalaire de feuilletage) dépassant de la deuxième feuille de verre, par un bord (principal) de sa face interne, couvrant la première matière d'isolation électrique, dit premier bord couvrant.

Le troisième verre fournit une protection mécanique de la première entrée de câblage, empêchant notamment un éventuel arrachement de câble dans cette zone.

La première matière d'isolation électrique quant à elle renforce la tenue mécanique et le maintien de l'entrée de câblage sur le verre, sécurise le vitrage à cristaux liquides et est protégée mécaniquement par le premier bord couvrant.

L'installation du vitrage à cristaux liquides est facilitée notamment lorsque le vitrage à cristaux liquides est glissé dans un dormant.

Le vitrage à cristaux liquides est donc à la fois plus résistant mécaniquement et sécurisé électriquement.

La première matière d'isolation électrique peut remplir de préférence complètement l'espace entre le premier bord couvrant et le premier bord dépassant.

Le premier bord couvrant peut couvrir tout ou partie du premier bord dépassant.

Le diamètre de l'entrée de câblage peut être d'au moins 0,3 mm, voire d'au moins 1 mm.

La largeur du premier bord dépassant peut être d'au moins 3 mm, voire d'au moins 10 mm.

La largeur du premier bord couvrant peut être d'au moins 3 mm voire d'au moins 10 mm, et être identique à celle du premier bord dépassant. La tranche de la première feuille de verre le long de la première entrée de câblage est alors sensiblement coplanaire avec la tranche de la troisième feuille de verre.

Pour renforcer la protection mécanique du vitrage, le vitrage à cristaux liquides peut comprendre un quatrième feuille de verre feuilletée par la première face externe avec la première feuille de verre par un deuxième intercalaire de feuilletage en une matière polymérique intercalaire transparente, notamment à base d'éthylène-vinyl acétate, de polyvinylbutyral ou de polyuréthane et de préférence identique à la première matière intercalaire.

Comme intercalaire de feuilletage usuel, on peut citer le polyuréthane (PU) utilisé souple, un thermoplastique sans plastifiant tel que le copolymère éthylène/acétate de vinyle (EVA), le polyvinyl butyral (PVB), un copolymère de polyéthylène et d'acrylate par exemple vendu par la société Dupont sous le nom de Butacite ou vendu par la société Solutia sous le nom de Saflex. Ces plastiques ont par exemple une épaisseur entre 0,2 mm et 1,1 mm, notamment 0,38 et 0,76 mm en incluant ces valeurs.

Comme autres matières plastiques, on peut aussi utiliser des polyoléfines comme du polyéthylène (PE), du polypropylène (PP), du polynaphtalate d'éthylène (PEN) ou du polychlorure de vinyle (PVC) ou des résines ionomères.

Afin de respecter les normes bâtiment, on feuillète ainsi de préférence avec du PVB qui est plus performant à épaisseur égale que le PU et l'EVA.

On peut choisir aussi d'utiliser 0,8 mm de résine ionomère proposée sous le nom de Sentriglass par la société Dupont.

Ce double feuilletage permet en outre au vitrage d'être classé:
- vitrage de sécurité selon les normes EN12600 (tests simulant la chute d'une personne) et la norme NF DTU039, si le verre est monté avec reprise sur quatre côtés,
- vitrage anti- effraction selon la norme EN356.

Le vitrage peut en outre être protégé des rayons ultraviolets par l'ajout d'additifs dans les matières intercalaires.

Toutes les feuilles de verre de préférence sont de même forme (courbes ou à coins).

Pour renforcer encore la robustesse du vitrage à cristaux liquides, on cherche à protéger le premier câble avant son raccord au secteur (ou toute autre alimentation électrique),

Ainsi, notamment au lieu de le faire courir le long du chant du vitrage, le câblage électrique comprend un premier câble électrique avec la première entrée de câblage et qui sur au moins une partie de sa longueur située au-delà de la première entrée du câblage, notamment comportant au moins une gaine (la gaine interne voire la gaine externe classique du câble), est logé dans une gorge formée :
- entre les première et troisième feuilles de verre, notamment entre le premier bord dépassant et le premier bord couvrant, et/ou
- entre une autre zone dépassante de la troisième feuille de verre de la première feuille, dite troisième zone, et une zone, dite quatrième zone, d'une quatrième feuille de verre feuilletée par la première face externe avec la première feuille de verre par un deuxième intercalaire de feuilletage en une matière polymérique intercalaire transparente.

La ou les gorges protègent et forment un guidage des câbles.

Le câble peut affleurer de la gorge ou être entièrement dans la gorge.

L'insertion dans la gorge permet en outre d'avoir un vitrage plus compact, d'éviter une surépaisseur locale.

On peut envisager diverses configurations de câblage (un ou plusieurs câbles) le long d'un seul bord (latéral ou longitudinal) du vitrage ou sur deux bords adjacents ou opposés du vitrage.

La hauteur de la gorge périphérique entre le bord dépassant et le bord couvrant (correspondant sensiblement à l'épaisseur de la deuxième feuille de verre) peut être d'au moins 3 mm environ.

La hauteur de la gorge périphérique entre le troisième et le quatrième verre (correspondant sensiblement à l'épaisseur des première et deuxième feuilles de verre) peut être d'au moins 6 mm environ.

On peut en outre souhaiter immobiliser le câblage électrique - dans une gorge du vitrage et/ou contre sa tranche - et éviter son arrachement.

Aussi, le câblage électrique peut comprendre un premier câble électrique avec la première entrée de câblage et qui sur au moins une partie de sa longueur située au-delà de la première entrée du câblage comporte une gaine, notamment la gaine interne, recouverte par une matière polymérique de maintien, (voire en contact direct), matière notamment étanche à l'eau liquide voire vapeur et/ou isolante électrique, de préférence identique voire formant la première matière d'isolation électrique, et la gaine étant de préférence figée par la matière de maintien (gaine de préférence immergée dans la matière de maintien).

On choisit une matière de maintien polymérique suffisamment adhérente à la gaine et adhérente au verre, par exemple thermoplastique.

L'EVA a par exemple une bonne adhésion avec le verre et à une gaine en polychlorure de vinyle (PVC) contrairement à une gaine fluorée (le téflon etc).

Cette matière de maintien polymérique peut être une colle.

L'épaisseur de la matière de maintien polymérique est par exemple sensiblement égale au diamètre du câble, par exemple de l'ordre de 5 mm, notamment si le câble est le long du chant du vitrage.

Si une longueur de câblage électrique est contre le chant du vitrage, la matière de maintien fixe cette longueur de câblage contre le chant.

Si une longueur de câblage électrique est dans une gorge du vitrage, cette matière de maintien peut remplir complètement la gorge au moins sur sa partie plus externe que le câble.

Cette matière de maintien améliore encore la tenue mécanique et le positionnement du câble, facilite l'installation du vitrage notamment lorsque le vitrage est glissé dans un dormant.

De préférence, le câblage est recouvert tout le long du vitrage par cette matière (avant sa sortie pour raccordement au secteur).

Il est en outre possible de masquer le câblage par la matière de maintien choisie opaque par exemple d'un blanc laiteux par ajout si nécessaire d'additifs dans la matière de maintien.

De manière avantageuse, le câblage électrique peut comporter un premier câble électrique avec la première entrée de câblage et fixé dans une position déterminée unidirectionnelle, notamment linéaire, notamment le long du chant ou d'une gorge périphérique du vitrage, en sortie du vitrage voire à partir du dehors de la première entrée de câblage avec la première matière d'isolation électrique.

Le caractère unidirectionnel peut être facilité :
- par la première matière d'isolation électrique qui peut initier une direction privilégiée dès la zone d'entrée de câblage,
- et/ou par la matière de maintien figeant le câble,
- et/ou son insertion dans une gorge du vitrage (montage en force).

On préfère ainsi ne pas former de U (et de préférence de L), même après branchement avec l'alimentation électrique générale (secteur ...).

Cela évite ainsi toute détérioration du câble par pliage, lors du transport, ou de l'installation, comme de la désinstallation (réparation etc).

Aussi, dans une première configuration unidirectionnelle, le câblage électrique comprend un (seul) premier câble dont l'entrée est au niveau du bord susceptible d'être, après montage du vitrage, le bord supérieur ou respectivement inférieur (position par rapport au sol) du chant du vitrage ou d'une gorge périphérique du vitrage, à partir du dehors de la première entrée de câblage avec la première matière d'isolation électrique, ce premier câble est unidirectionnel, vers l'alimentation électrique (générale), notamment au plafond ou respectivement au sol.

Aussi, dans une deuxième configuration unidirectionnelle (alternative ou cumulative), le câblage électrique comprend un (seul) premier câble dont l'entrée est au niveau du bord susceptible d'être, après montage du vitrage, le bord latéral du chant du vitrage ou d'une gorge périphérique du vitrage, à partir du dehors de la première entrée de câblage avec la première matière d'isolation électrique, le câble est unidirectionnel.

Dans un vitrage à coins, le bord latéral est vertical après montage, et peut être indifféremment plus long, égal ou plus court que le bord horizontal.

De préférence, le câble suit un seul bord.

Pour simplifier le raccordement, de préférence le câblage électrique peut sortir du vitrage, notamment sans couverture par la première matière d'isolation électrique, dans une unique zone, notamment une zone d'un seul bord du chant, et de préférence le câblage est constitué d'un unique premier câble électrique qui est bi-brins.

Pour étendre la protection électrique et mécanique du vitrage, la première zone d'alimentation électrique peut comprendre une première amenée de courant sur laquelle est fixée la première entrée de câblage et qui est couverte par le premier bord couvrant et éventuellement protégé par la première matière d'isolation électrique.

La première amenée de courant (couramment appelé « bus bar ») est par exemple une bande électroconductrice sous forme d'un clinquant souple en cuivre fixée sur la première électrode le long du bord.

Pour fiabiliser encore le vitrage, il peut comprendre un joint d'étanchéité à l'eau liquide, voire vapeur, externe au joint de scellement et formé par une matière polymérique d'étanchéité, notamment isolante électrique, le joint d'étanchéité étant agencé pour l'étanchéité de la première entrée de câblage, et de préférence d'une éventuelle première amenée de courant, et (sur tout ou partie) de la première électrode dans la zone extérieure au joint de scellement.

La matière polymérique d'étanchéité adhère suffisamment aux verres et si nécessaire à la première matière intercalaire. Il n'est pas non plus nécessaire de rajouter de couche(s) (mince(s)) d'accrochage sur la surface de(s) verre(s) pour renforcer l'adhésion.

La matière polymérique d'étanchéité garantit donc l'étanchéité à l'eau liquide, voire même vapeur, notamment très stricte dans les milieux humides (salle de bain, etc).

Comme applications en zone humide (inondable etc), on peut citer :
- une pièce d'eau (séparée ou faisant partie d'une chambre ou tout autre pièce), une laverie, une buanderie, dans une salle de bains, une douche, notamment comme sol, paroi, cloison, porte (éventuellement coulissante), fenêtre de façade ou fenêtre intérieure,
- une piscine, dalle (de sol), paroi (murale), fenêtre, cabine d'essayage,
- une façade de bâtiment (vitrine, fenêtre notamment en rez-de-chaussée, de jardin) dans les zones inondables etc,
- un vitrage de signalisation routière, urbaine ou côtière, dans les zones inondables etc, dans une rue proche ou en bord de mer, d'une rivière, d'un fleuve...,
- un bateau.

Dans une conception préférée, la matière d'étanchéité forme en outre la première matière d'isolation électrique.

Le joint d'étanchéité peut être le long d'au moins un bord de la première tranche et/ou le long d'une gorge périphérique ménagée dans le vitrage notamment entre le premier bord dépassant et le premier bord couvrant.

De préférence, le joint d'étanchéité à l'eau liquide, voire vapeur est en outre agencé pour l'étanchéité de la deuxième entrée de câblage, et de préférence d'une éventuelle amenée de courant de la deuxième électrode et (sur tout ou partie) de la deuxième électrode dans la zone extérieure au joint de scellement.

Dans une conception avantageuse, pour garantir l'étanchéité complète du vitrage à cristaux liquides, le joint d'étanchéité à l'eau est sur tout le pourtour du vitrage :
- et est contre le chant du vitrage, notamment pour une protection des coins de feuille(s) de verre,
- et/ou est dans une ou des gorges périphériques ménagées dans le vitrage, notamment pour éviter une surépaisseur locale (et une épaisseur de joint sur le chant).

Le joint d'étanchéité à l'eau peut border, voire couvrir éventuellement le câblage électrique, la matière d'étanchéité pouvant notamment être la matière de maintien déjà évoquée.

Le joint d'étanchéité à l'eau peut être exempt d'un entourage externe notamment opaque (cadre rigide, baguette, menuiserie...).

Le joint d'étanchéité à l'eau peut procurer une finition satisfaisante nécessaire pour les installations bord à bord et les installations du vitrage en porte. Par ailleurs, le joint peut amortir les chocs, notamment protéger les coins de vitrage.

On peut préférer une matière d'étanchéité transparente, comme par exemple l'EVA, notamment si le joint d'étanchéité est visible, par exemple dans les applications de porte.

La largeur (section transversale) du joint d'étanchéité à l'eau liquide n'est pas forcément identique sur tout le pourtour.

Par ailleurs, dans une mise en oeuvre de l'invention, l'entrée de câblage est le long du chant, la matière de maintien peut être formée à partir du premier film intercalaire débordant de la troisième feuille de verre (notamment repliée pour entourer le câblage).

Pour la première matière d'isolation électrique et/ou la matière d'étanchéité et/ou une matière de maintien du câblage électrique, on choisit une matière adhérente au verre, par exemple thermoplastique.

La première matière d'isolation électrique et/ou la matière d'étanchéité du joint qui forme éventuellement la première matière d'isolation électrique et/ou la matière de maintien du câblage électrique peut être avantageusement transformée (c'est-à-dire mise en forme, notamment par ramollissement, collage, liquéfaction et de préférence réticulation) par cycle thermique notamment en étuve ou par simple chauffage. Cette transformation est préférable:
- à une extrusion, lourde à mettre en oeuvre en production sans garantie d'adhésion au verre,
- ou encore à l'usage d'une colle thermofusible (« hot melt adhesive » en anglais) appliquée à chaud avec un pistolet, sans garantie d'adhésion au verre.

La première matière d'isolation électrique peut être en éthylène-vinyl acétate (matière moulable) ou encore en silicone, notamment pour fournir une étanchéité à l'eau liquide voire vapeur.

La première matière d'isolation électrique peut aussi être enfin en résine thermodurcissable, notamment résine époxy, utilisant de préférence la même matière que le joint de scellement et fournissant également l'étanchéité à l'eau liquide, voire vapeur.

La première matière d'isolation électrique peut être en polyuréthane ou polystyrène (qui sont moulables) ou encore en polyvinylbutyral ou résine ionomère, sans toutefois fournir une fonction d'étanchéité à l'eau.

On peut aussi choisir toutes ces matières (éthylène-vinyl acétate, silicone, résine époxy, polyuréthane, polystyrène, polyvinylbutyral, résine ionomère) pour la matière de maintien du câblage électrique.

De manière préférée, la matière d'étanchéité qui forme éventuellement la première matière d'isolation électrique et/ou qui forme éventuellement une matière de maintien du câblage électrique est réticulée, notamment former un réseau tridimensionnel pour renforcer l'étanchéité à l'eau liquide, voire vapeur.

De manière préférée, la première matière d'isolation électrique et/ou la matière d'étanchéité et/ou une matière de maintien du câblage électrique peut être en silicone ou à base d'éthylène-vinyl acétate, notamment réticulée par des agents tels que du peroxyde organique.

L'EVA en particulier adhère bien au verre comme déjà indiqué.

Comme déjà vu, la première matière intercalaire peut être un polymère organique d'assemblage, notamment thermoplastique, du type éthylène-vinyl acétate (EVA) ou polyvinylbutyral (PVB), ou polyuréthane (PU), la première matière intercalaire plastique étant éventuellement en contact avec la première matière d'isolation électrique et/ou la matière d'étanchéité du joint et/ou la matière de maintien de câblage électrique.

La première matière intercalaire peut être avantageusement transformée par cycle thermique comme la première matière d'isolation électrique et/ou la matière d'étanchéité et/ou la matière de maintien de câblage
- par transformations successives de ces matières pendant des cycles thermiques distincts (notamment en étuve),
- ou de manière avantageuse transformation simultanée de ces matières (phases simultanées ou concordantes de ramollissement, de collage, de liquéfaction et de préférence de réticulation) pendant un cycle thermique (notamment en étuve).

La première matière d'isolation électrique et/ou la matière d'étanchéité du joint qui forme éventuellement la première matière d'isolation électrique et/ou une matière de maintien du câblage électrique peut présenter une surface dite externe, orientée vers l'extérieur du vitrage, qui est moulée.

La surface externe peut être plane, lisse ou volontairement rainurée, dentelée. Elle peut former un profilé notamment pour une économie de matière, en étant bombée vers l'extérieur par exemple.

Le premier bord dépassant peut être obtenu par décalage des première et deuxième tranches ou par découpe partielle de la deuxième tranche.

La deuxième feuille de verre peut dépasser d'un bord de tranche de la première feuille de verre, par un bord de la deuxième face interne dit autre bord dépassant, comportant la deuxième zone d'alimentation électrique, et en ce que le vitrage comprend :
- une deuxième matière d'isolation électrique de la deuxième entrée de câblage, polymérique, identique ou distincte de la première matière d'isolation électrique,
- une quatrième feuille de verre feuilletée par la première face externe avec la première feuille de verre par un deuxième intercalaire de feuilletage en une matière polymérique transparente, la quatrième feuille de verre (et éventuellement le deuxième intercalaire de feuilletage) dépassant de la première feuille de verre, par un bord de sa face interne, couvrant la deuxième matière d'isolation électrique, dit autre bord couvrant.

Le premier bord dépassant peut s'étendre sur une partie limitée du premier bord de la première face interne, le dépassement étant obtenu par une découpe partielle de la deuxième tranche. Et de préférence la deuxième feuille de verre peut dépasser d'un bord de la première tranche, par un bord de la deuxième face interne dit autre bord dépassant, comportant la deuxième zone d'alimentation électrique, et s'étendant sur une partie limitée d'un bord de la deuxième face interne, le dépassement étant obtenu par une découpe partielle de la première tranche, et de préférence le premier bord dépassant et l'autre bord dépassant sont sur un même bord du vitrage.

On simplifie ainsi encore le vitrage à cristaux liquides en formant des première et deuxième zones d'alimentation électrique rapprochées et/ou en outre cela peut limiter la longueur de câblage nécessaire. On laisse toutefois un espace suffisant entre elles pour éviter un échauffement des liaisons entrées de câbles - parties externes, par exemple par soudure.

De préférence les extrémités des première et deuxième entrées de câblage sont espacées d'une longueur dite de séparation, mesurée suivant le plan principal du vitrage, supérieure ou égale à 10 cm, voire supérieure ou égale à 15 cm, notamment inférieure à 30 cm.

Par exemple, pour rapprocher les entrées de câblage et les éventuelles amenées de courant sur le même bord du vitrage à coins (rectangulaire, carré...), on coupe chacune de première et deuxième feuilles de verre sur la moitié de la largeur de ce bord.

Par ailleurs, les espaceurs peuvent être de préférence en une matière plastique transparente dure. Les espaceurs déterminent (grossièrement) l'épaisseur de la couche de cristaux liquides. On préfère par exemple des espaceurs en polyméthacrylate de méthyle (PMMA).

Les espaceurs sont de préférence en matière d'indice optique (sensiblement) égal à l'indice optique de (la matrice de) la couche de cristaux liquides.

La couche de cristaux liquides peut être à base de cristaux liquides de différents types.

Pour les cristaux liquides, on peut en effet utiliser tous les systèmes à cristaux liquides connus sous les termes de « NCAP » (Nematic Curvilinearly Aligned Phases en anglais) ou « PDLC » (Polymer Dispersed Liquid Cristal en anglais) ou « CLC » (Cholesteric Liquid Cristal en anglais) ou « NPD-LCD » (Non-homogenous Polymer Dispersed Liquid Crystal Display en anglais).

Ceux-ci peuvent en outre contenir des colorants dichroïques, notamment en solution dans les gouttelettes de cristaux liquides. On peut alors conjointement moduler la diffusion lumineuse et l'absorption lumineuse des systèmes.

On peut également utiliser, par exemple, les gels à base de cristaux liquides cholestériques contenant une faible quantité de polymère réticulé, comme ceux décrits dans le brevet WO-92/19695. Plus largement, on peut donc choisir des « PSCT » (Polymer Stabilized Cholesteric Texture en anglais).

En particulier, on peut utiliser des cristaux liquides smectiques bistables, par exemple comme détaillé dans le brevet EP2256545, qui commutent sous l'application d'un champ électrique alternatif sous forme impulsionnelle et qui restent dans l'état commuté jusqu'à l'application d'une nouvelle impulsion.

Le système à cristaux liquides peut être discontinu, en plusieurs morceaux (par exemple de type pixels).

Dans des zones humides comme ailleurs, le vitrage selon l'invention peut être utilisé (aussi) :
- comme cloison interne (entre deux pièces ou dans un espace) dans un bâtiment, dans un moyen de locomotion terrestre, aérien, aquatique (entre deux compartiments, dans un taxi etc),
- comme porte vitrée, fenêtre, plafond, dallage (sol, plafond),
- comme vitrage latéral, toit d'un moyen de locomotion terrestre, aérien, aquatique,
- comme écran de projection,
- comme façade de magasin, vitrine notamment d'un guichet.

Naturellement, le vitrage selon l'invention peut former tout ou partie d'une cloison et autre fenêtre (type imposte etc), d'un vitrage multiple (par rajout d'un vitrage supplémentaire).

La présente invention a aussi pour objet un procédé de fabrication d'un vitrage multiple à diffusion variable par cristaux liquides tel que décrit précédemment comportant les étapes suivantes dans cet ordre :
- avant ou après formation du joint de scellement, un dépôt par voie liquide d'une composition de cristaux liquides sur la première feuille de verre dotée de la première électrode voire sur la deuxième feuille de verre dotée de la deuxième électrode,
- un assemblage des première et deuxième feuilles de verre de façon à former le premier bord dépassant, voire l'autre bord dépassant,
- une insolation (notamment sous ultraviolet) des cristaux liquides pour former la couche de cristaux liquides,
et en outre
- une liaison de la première entrée de câblage à la première électrode dans la première zone d'alimentation électrique et de préférence la liaison de la deuxième entrée de câblage à la deuxième électrode dans la deuxième zone d'alimentation électrique,
- une isolation électrique de la première entrée de câblage par la première matière d'isolation électrique polymérique, et éventuellement l'isolation électrique de la deuxième entrée de câblage par la deuxième matière d'isolation électrique polymérique,
- un feuilletage de la troisième feuille de verre avec la deuxième feuille de verre par le premier intercalaire de feuilletage de façon à former le premier bord couvrant,
- un éventuel autre feuilletage de la quatrième feuille de verre avec la première feuille de verre par le deuxième intercalaire de feuilletage de façon à former l'autre bord couvrant.

De manière avantageuse, le feuilletage avec la première matière intercalaire de feuilletage, notamment en PVB (et de préférence l'autre feuilletage avec la deuxième matière intercalaire de feuilletage notamment en PVB) implique le placement du vitrage dans un autoclave.

On pourrait préférer de la matière plastique ne nécessitant pas un passage en autoclave pour ne pas risquer de dégrader les cristaux liquides, mais dont un simple chauffage suffit. C'est pourquoi on préfère l'EVA pour la première matière d'isolation électrique et éventuellement pour la première plastique intercalaire notamment thermoplastique (si on veut une continuité de matières notamment).

Toutefois, de manière surprenante, la Demanderesse a constaté que les performances optiques du vitrage à cristaux liquides n'étaient pas dégradées par l'autoclave car de manière inattendue les espaceurs maintiennent l'épaisseur de la couche de cristaux liquides, autoclave par exemple nécessaire pour un feuilletage avec du PVB. Le PVB permet en outre un renfort mécanique du vitrage optimal en cas de double feuilletage et l'EVA est transformable lors du feuilletage par le PVB.

Dans un mode de réalisation préféré, ladite isolation électrique comprend:
- une insertion de la première matière d'isolation électrique, - notamment solide, sous toute forme, notamment languette, bille, granulé, voire en poudre -, sur le premier bord dépassant,
- le placement d'un moule en regard, voire en contact avec la première tranche et la troisième tranche et avec une surface interne de moulage en regard d'une gorge entre le premier bord dépassant et le premier bord couvrant incluant la première matière d'isolation électrique,
- un chauffage (par exemple sous vide) fluidifiant la première matière polymérique d'isolation électrique, notamment en EVA, de sorte que la première matière d'isolation électrique épouse la surface interne de moulage et remplisse la gorge.

Le moulage permet de choisir à façon dimensions et formes de la matière d'isolation électrique.

Avec le moule, la matière polymérique d'isolation électrique va en effet se répandre de façon contrôlée. On vient ainsi forcer la répartition de la matière en utilisant un moule de forme complémentaire à la forme souhaitée pour l'isolation électrique, voire pour l'étanchéité, et/ou la protection mécanique du câblage.

Le moule est de préférence de hauteur supérieure à la hauteur totale du vitrage (autrement dit l'épaisseur totale du vitrage).

L'EVA a une capacité de fluage suffisante et de préférence est réticulable (par insertion d'agent(s) de réticulation) lors et/ou à partir du passage en étuve.

De manière avantageuse, ledit chauffage peut fluidifier en outre la première matière intercalaire notamment en EVA (et la deuxième matière intercalaire, notamment en EVA) pour réaliser ledit feuilletage (et de préférence l'autre feuilletage) de préférence pendant le même cycle thermique, et éventuellement la première matière d'isolation électrique entre en contact avec la première matière intercalaire notamment sur le premier bord couvrant.

Lorsque le moulage est antérieur au feuilletage, on conserve de préférence le moule (ou on place un autre élément adapté) sur le pourtour du vitrage pendant le feuilletage car si la matière plastique intercalaire, notamment thermoplastique, déborde en fluant, elle est alors contenue par le moule (ou d'un autre élément adapté).

Les première et troisième feuilles de verre peuvent être décalées d'une façon incontrôlée (non souhaitée) lors de l'assemblage. Cela crée une disparité de dimensions qui est problématique pour l'installation et peut même conduire au rebut.

Lorsque le moulage est antérieur au feuilletage, on conserve le moule sur le pourtour du vitrage pendant le feuilletage pour supprimer cet inconvénient.

En effet, en ceinturant le vitrage avec le moule, on réaligne les première et troisième feuilles de verre dès lors que leurs tranches viennent en butée contre le moule.

Ainsi :
- le décalage des verres est limité,
- la finition du bord sera contrôlée au choix selon la forme du moule (carré, arrondi, etc.),
- l'esthétisme est garanti.

De préférence, pour son maintien, le moule peut être en appui sur le vitrage au moins par une face principale externe du vitrage et éventuellement en butée contre la première tranche et la troisième tranche et/ou le moule, en une ou plusieurs pièces, ceinture le pourtour du vitrage.

Le moule peut être en appui par les deux faces externes principales du vitrage ou le moule (par exemple avec une section en L) peut être en appui seulement sur un bord d'une des faces externes principales du vitrage et une enveloppe (textile, etc) est disposée sur un bord de l'autre face externe principale du vitrage et s'étend sur le moule.

La matière polymérique d'isolation électrique est facilement insérable entre le moule et le bord de la première feuille.

En outre, un même moule ouvert (en L...) peut servir pour des épaisseurs de verre différentes, donc le stock de moules est simple à gérer.

Pour un moulage sur deux côtés opposés, on peut utiliser un moule par exemple en deux pièces espacées. Pour un moulage sur deux côtés adjacents, on peut utiliser un moule par exemple en une pièce ou en des première et deuxième pièces. Par exemple, la première pièce et la deuxième pièce ayant chacune une extrémité latérale libre et une extrémité latérale en butée contre une extrémité latérale de l'autre pièce.

Pour un moulage complet sur les quatre côtés, le moule peut être en quatre pièces, par exemple chacune avec une extrémité latérale libre et une extrémité en butée contre une extrémité d'une autre pièce adjacente.

La hauteur de moulage peut être identique ou distincte pour un bord avec l'alimentation électrique ou un bord avec un câble maintenu ou un bord sans câble ni alimentation électrique. On adapte ainsi le moule en conséquence.

En concevant le moule d'une façon appropriée, on peut créer une dimension supplémentaire en dehors du verre. Cela permet:
- de solidifier l'entrée du câblage et voire l'ensemble du câblage (améliorant la résistance à l'arrachement),
- de guider le câblage suivant une direction.

Le procédé peut comprendre une immobilisation du premier câble électrique (avant son raccordement, sa sortie du vitrage) voire d'un éventuel deuxième câble électrique (avant son raccordement, sa sortie du vitrage) incluant de préférence une insertion de la matière de maintien, - de préférence solide, sous toute forme, notamment languette, bille, granulé, voire en poudre - sur le premier câble et dans le moule, monolithique ou en plusieurs pièces, le chauffage fluidifiant la matière polymérique de maintien, notamment en EVA de sorte que la matière de maintien épouse la surface de moulage et fige le premier câble électrique, notamment bi brins, voire le deuxième câble électrique.

Le procédé peut comprendre une formation du joint d'étanchéité à l'eau liquide, voire vapeur, externe au joint de scellement incluant de préférence une insertion dans le moule de la matière d'étanchéité, - de préférence solide, sous toute forme, notamment languette, bille, granulé, voire en poudre -, de la première entrée de câblage, de la première électrode, de l'éventuelle première amenée de courant, voire de la deuxième entrée de câblage, de la deuxième électrode, de l'éventuelle deuxième amenée de courant, le chauffage fluidifiant la matière polymérique d'étanchéité notamment en EVA de sorte que la matière de maintien épouse la surface de moulage et adhère au verre, la formation du joint d'étanchéité incluant de préférence l'immobilisation du premier câble électrique.

Pour le passage du câblage, le moule comportant la matière de maintien peut être ouvert ou percé de trou(s) sur sa paroi en regard du chant du vitrage pour sortir le câblage et/ou le moule peut être ouvert latéralement sur au moins un côté pour sortir le premier câble et de préférence les bords latéraux du moule sont obturés, notamment par du tissu ou du scotch.

Pour simplifier et écourter la fabrication, l'isolation électrique, l'immobilisation du premier câble et/ou la formation du joint d'étanchéité, notamment avec le moule, peut comporter une étape de chauffage simultané et de préférence à partir d'une unique matière, de préférence en EVA.

Le moule peut présenter une surface de moulage anti-adhérente à la première matière polymérique d'isolation électrique, notamment choisie parmi le téflon, la silicone.

Le moule peut avoir une section transversale:
- en L comme déjà vu,
- ou en C : la matière de protection aura une forme (symétrique) de C avec des angles lisses.

Avec une gorge entre les verres, on peut insérer le câblage dans cette gorge. Eventuellement la surface de moulage est alors entre les faces internes des verres, ce qui offre plusieurs avantages :
- suppression du risque de fluage des verres débordants,
- obtention d'une matière de protection non débordante (par exemple affleurant au chant),
- renforcement de la protection du câblage,
- réduction de la dimension latérale du vitrage.

D'autres détails et caractéristiques apparaîtront de la description détaillée qui va suivre, faite en regard des dessins annexés sur lesquels :
- la figure 1a représente une vue en coupe transversale schématique d'un premier mode de réalisation du vitrage multiple à diffusion variable par cristaux liquides selon l'invention,
- la figure 1b représente une vue en coupe latérale schématique et partielle du vitrage multiple à diffusion variable par cristaux liquides de la figure 1,
- la figure 1c représente une vue schématique de dessus du vitrage multiple à diffusion variable par cristaux liquides de la figure 1a,
- la figure 1d représente une vue partielle et schématique en coupe transversale du vitrage multiple à diffusion variable par cristaux liquides de la figure 1a en cours de fabrication,
- la figure 2a représente une vue schématique de dessus d'un deuxième mode de réalisation du vitrage multiple à diffusion variable par cristaux liquides selon l'invention,
- la figure 2b représente une vue en coupe latérale schématique et partielle du vitrage multiple à diffusion variable par cristaux liquides de la figure 2a en cours de fabrication,
- la figure 2c représente une vue en coupe latérale schématique et partielle du vitrage multiple à diffusion variable par cristaux liquides de la figure 2a,
- la figure 3a représente une vue schématique de dessus d'un troisième mode de réalisation du vitrage multiple à diffusion variable par cristaux liquides selon l'invention,
- la figure 3b représente une vue en coupe latérale schématique et partielle du vitrage multiple à diffusion variable par cristaux liquides de la figure 3a en cours de fabrication,
- la figure 3c représente une vue en coupe latérale schématique et partielle du vitrage multiple à diffusion variable par cristaux liquides de la figure 3a,
- la figure 4a représente une vue en coupe transversale schématique d'un quatrième mode de réalisation du vitrage multiple à diffusion variable par cristaux liquides selon l'invention,
- la figure 4b représente une vue schématique et partielle de dessus du vitrage multiple à diffusion variable par cristaux liquides de la figure 4a,
- la figure 5 représente une vue schématique de dessus d'un cinquième mode de réalisation du vitrage multiple à diffusion variable par cristaux liquides selon l'invention.

On précise que par un souci de clarté les différents éléments des objets représentés ne sont pas nécessairement reproduits à l'échelle.

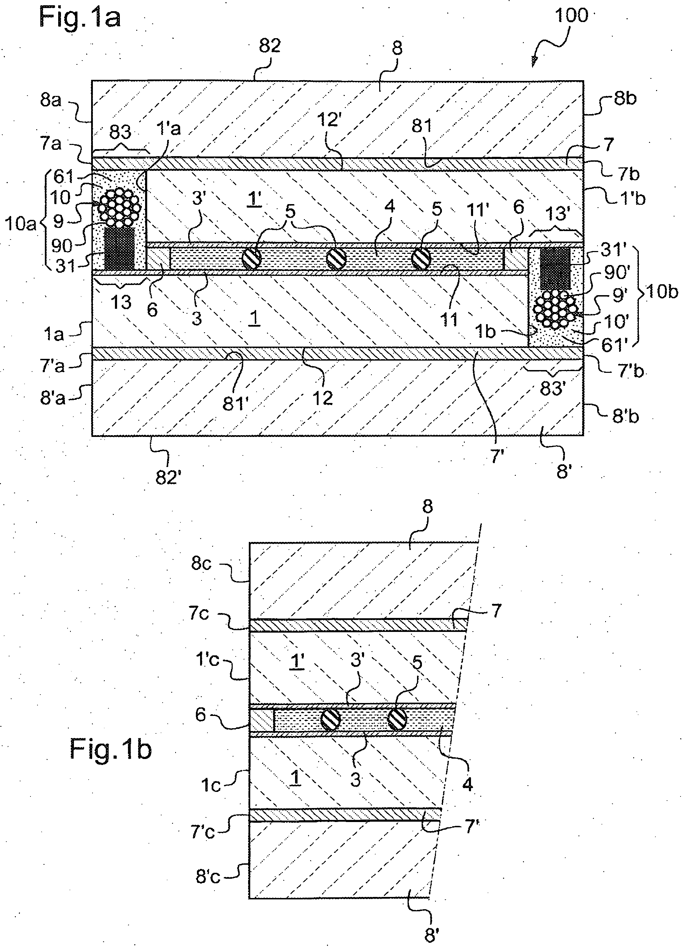

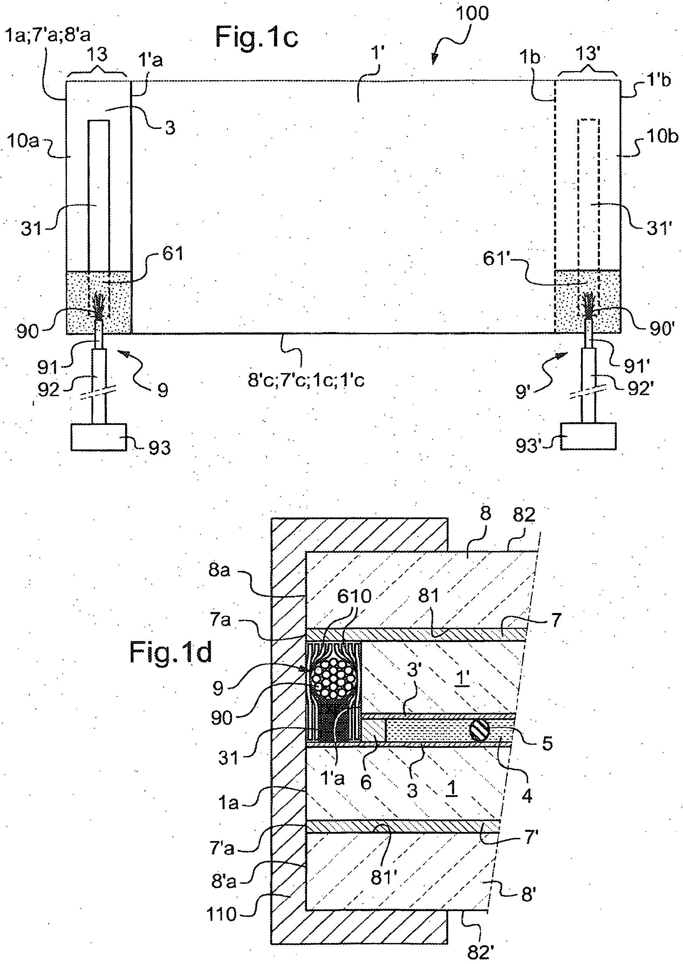

La figure 1 représente une vue en coupe transversale schématique d'un premier mode de réalisation du vitrage multiple à diffusion variable par cristaux liquides selon l'invention avec
- une première feuille de verre 1, rectangulaire - définissant quatre bords -, avec une face dite première face interne 11 et une autre face dite première face externe 12 et une tranche dite première tranche 1a à 1d,
- une deuxième feuille de verre, rectangulaire - définissant quatre bords -, avec une face dite deuxième face interne 11' et une autre face dite deuxième face externe 12' et une tranche dite deuxième tranche 1'a à 1'd.

La première feuille de verre 1 dépasse d'un bord de la deuxième tranche 1'a, par un premier bord 13 de la première face interne 11, dit premier bord dépassant 13. Par exemple, il s'agit d'un premier bord latéral (ou en variante longitudinal).

La deuxième feuille de verre 1' dépasse d'un bord de tranche de la première feuille de verre 1b, par un bord de la deuxième face interne dit autre bord dépassant 13'. Par exemple, il s'agit du deuxième bord latéral (ou en variante longitudinal).

Le premier bord dépassant 13 et l'autre bord dépassant (ici opposé) sont obtenus par décalage des première et deuxième tranches 1a, 1'a.

Sur chacune des première et deuxième feuilles de verre flotté 1 et 1' est disposée sur les faces internes 11, 11' une couche électriquement conductrice 3, 3' d'une épaisseur d'environ 20 à 400 nm, réalisée en oxyde d'indium et d'étain (ITO) par exemple. Les couches d'ITO ont une résistance électrique de surface comprise entre 5 Ω/□ et 300 Ω/□. Au lieu des couches réalisées en ITO, on peut également utiliser dans le même but d'autres couches d'oxyde électriquement conducteur ou des couches d'argent dont la résistance de surface est comparable.

La couche 4 de cristaux liquides, qui peut présenter une épaisseur d'environ 15 à 60 µm, est située entre les couches électrodes 3 et 4.

La couche 4 de cristaux liquides contient des espaceurs sphériques 5. Les espaceurs 5 sont constitués d'un polymère dur transparent. A titre d'exemple, le produit de Sekisui Chemical Co., Ltd, connu sous la désignation "Micropearl « SP » s'est avéré bien convenir comme espaceur, en polyméthacrylate de méthyle (PMMA).

Par ailleurs, pour la couche de cristaux liquides, on peut utiliser aussi des composés connus, par exemple les composés décrits dans le document US 5 691 795. Le composé de cristaux liquides de Merck Co., Ltd, commercialisé sous le nom commercial "Cyanobiphenyl Nematic Liquid Crystal E-31 LV" s'est également avéré convenir particulièrement bien. Dans le cas de ce mode de réalisation, ce produit est mélangé dans un rapport 10:2 avec une substance chirale, par exemple le 4-cyano-4'-(2-méthyl)butylbiphényle, et ce mélange est mélangé dans le rapport 10:0,3 avec un monomère, par exemple le 4,4'-bisacryloylbiphényle, et avec un initiateur d'UV, par exemple le méthyléther de benzoïne. Le mélange ainsi préparé est appliqué sur l'une des feuilles de verre revêtues. Après durcissement de la couche de cristaux liquides par irradiation à la lumière UV, il se forme un réseau polymère dans lequel les cristaux liquides sont incorporés.

En variante, la couche de cristaux liquides ne contient pas de polymère de stabilisation mais est uniquement constituée de la masse de cristaux liquides et des espaceurs. La masse de cristaux liquides est donc appliquée telle quelle sans additif monomère, a une épaisseur de 3 à 20 µm sur l'une des feuilles de verre 1, 1'. Des composés pour les couches de cristaux liquides de ce type sont décrits par exemple dans le document US 3 963 324.

Pour la couche de cristaux liquides, on peut utiliser des PDLC tel le composé 4-((4-Éthyle-2,6-difluorophényl)-éthinyl)-4'-propylbiphényl et 2-Fluor-4,4'-bis(trans-4-propylcyclohexyl)-biphenyl par exemple vendu par la société Merck sous la référence MDA-00-3506.

Sur le bord, la couche de cristaux liquides est scellée par un joint adhésif de scellement 6 qui sert en même temps à relier les feuilles de verre 1, 1' dotées des électrodes 3, 3' de manière ferme et permanente. La matière adhésive de scellement qui scelle les feuilles de verre distinctes 1 et 1' sur leurs bords contient une résine époxy.

En outre, ce vitrage 100 comprend de première et deuxième zones d'alimentation électrique :
- pour une première amenée de courant, une première bande électroconductrice 31 sous forme d'un clinquant souple en cuivre (couramment appelé « bus bar ») fixée sur la première électrode, le long du premier bord dépassant 13,
- pour une deuxième amenée de courant, une deuxième bande électroconductrice 31' sous forme d'un clinquant souple en cuivre fixée sur la deuxième électrode, le long de l'autre bord dépassant.

Le vitrage 100 comprend ensuite un câblage électrique avec deux câbles 9, 9' et donc deux entrées de câblage : une première entrée de câblage 90 qui est une âme sans gaine(s) d'un premier câble 9 soudée à la première amenée de courant 31 et une deuxième entrée de câblage 90' qui est l'âme sans gaine(s) d'un deuxième câble 9' soudée à la deuxième amenée de courant 31'.

La première entrée de câblage 90 est isolée par une matière d'isolation électrique 61 polymérique, ici choisie en EVA.

La deuxième entrée de câblage 90' est isolée par une matière d'isolation électrique 61' polymérique, ici choisie en EVA.

Une troisième feuille de verre 8, rectangulaire, d'épaisseur par exemple entre 2 mm et 4 mm (en incluant ces valeurs) est feuilletée par la deuxième face externe 12' avec la deuxième feuille de verre 1' par un premier intercalaire de feuilletage 7 en une première matière intercalaire polymérique transparente, ici du polyvinylbutyral de 0,38 m.

La troisième feuille de verre 7 et le premier intercalaire de feuilletage 8 dépassent de la deuxième feuille de verre 1', par un bord de sa face interne, couvrant la première matière d'isolation électrique 61, dit premier bord couvrant 83.

Une première gorge périphérique 10a est ainsi formée entre le premier bord dépassant 13 et le premier bord couvrant 83.

Le long de ce premier bord 13, les tranches des verres et intercalaires 1a, 7'a, 8'a, 7a, 8a sont alignées.

De même similaire, une quatrième feuille de verre 8' rectangulaire, d'épaisseur par exemple entre 2 mm et 4 mm (en incluant ces valeurs) est feuilletée par la première face externe 12 avec la première feuille de verre 1 par un deuxième intercalaire de feuilletage 7' en une matière polymérique transparente, ici du polyvinylbutyral de 0,38 m.

La quatrième feuille de verre 7' et le deuxième intercalaire de feuilletage 8' dépassent de la première feuille de verre 1, par un bord de sa face interne, couvrant la deuxième matière d'isolation électrique, dit autre bord couvrant 83' à l'opposé du premier bord couvrant.

Une deuxième gorge périphérique 10b est ainsi formée entre l'autre bord dépassant 13' et l'autre bord couvrant 83'.

Le long de ce premier bord 13', les tranches des verres et intercalaires 1b, 7'b, 8'b, 7b, 8b sont alignées.

Comme montré en figure 1 b, le long des deux autres bords adjacents, ici longitudinaux, toutes les tranches des verres et intercalaires 1c, 1'c, 7c, 8c, 7c, 7b 8c sont alignées.

La première entrée de câblage 90 et fixée dans une position déterminée unidirectionnelle, notamment linéaire_{;} en sortie du vitrage voire à partir du dehors de la première entrée de câblage 90 avec la première matière d'isolation électrique 91.

On choisit des premier et deuxième câbles 9, 9' par exemple d'âmes 90, 90' de section égale à 0,6 mm², et de diamètre total avec la gaine interne 91, 91' de 2 mm. Le diamètre total avec la gaine externe 92, 92' est de 5,5 mm. Les câbles sont raccordés au secteur 93, 93' en sortie du vitrage 100.

Comme montré en figure 1 d, on procède à l'isolation électrique de la première entrée de câblage 90 (respectivement de la deuxième entrée de câblage 90) avant le feuilletage.

Après le positionnement de la première intercalaire de feuilletage 7 et de la troisième feuille de verre 8 (respectivement de la deuxième intercalaire de feuilletage et de la quatrième feuille de verre), on insère la matière polymérique thermoplastique en EVA de préférence réticulable 610 par des agents tels que peroxyde organique, ceci sous forme de bandes - ou en variantes de billes -, dans la première gorge 10a (respectivement la deuxième gorge 10b). La largeur des bandes dépend de l'épaisseur des verres utilisés. On met par exemple des bandes d'EVA de 0,4 mm d'épaisseur pour recouvrir la première entrée du câble dénudé 90 (respectivement la deuxième entrée 90').

On utilise ensuite un moule 110 de surface interne, dite de moulage. Le moule 110, de section transversale (sensiblement) en C, est :
- en appui sur le vitrage par les faces externes principales des troisième et quatrième feuilles de verres 8, 8';
- en butée contre les chants des verres 1 a, 8a, 8'a voire des intercalaires 7a, 7'a, ou en variante avec un espace pour recouvrir les chants 1a, 8a de l'EVA moulé (par des éventuels des décrochements internes du moule).

Le moule 110 présente une surface (interne) de moulage non adhésive à l'EVA, par exemple en téflon.

Le moule 110 est ouvert latéralement sur un côté pour sortir le premier câble 9. Pour contenir l'EVA, les bords latéraux du moule sont fermés ou obturés notamment par du tissu ou du scotch (non visible).

Le moule 110 en variante présente une paroi latérale percée pour la sortie du premier câble.

En variante d'installation, on place les bandes d'EVA (juste) avant de positionner de la première intercalaire de feuilletage 7 et de la troisième feuille de verre 8.

Pour la deuxième entrée de câblage 90', on utilise une pièce de moulage similaire et on procède de la même façon.

On place l'ensemble vitrage et moule(s) dans une simple poche étanche au vide. On met sous vide primaire, afin de dégazer l'EVA (élimination des bulles ...) et on chauffe au-dessus de 100°C pour fluidifier la matière polymérique EVA pour que la matière EVA épouse la surface de moulage et pour débuter la réticulation de l'EVA.

Avec cet EVA, on forme en même temps le moyen d'étanchéité à l'eau liquide des première et deuxième entrées de câblage 90, 90'. Comme montré en figure 1c, les gorges 10a et 10b ne sont pas remplies par l'EVA en dehors de ces zones. Pour plus de clarté, les vues de dessus de tous les exemples ne montrent pas la troisième feuille de verre 8 et la première intercalaire de feuilletage 7.

La matière polymérique EVA 61 remplit l'espace restant dans la première gorge périphérique 10a entre la surface de moulage et le bord 1'a et vient en contact avec le PVB 7. De même, la matière polymérique EVA 61' remplit l'espace restant dans la deuxième gorge périphérique 10b entre la surface de moulage et le bord 1a et vient en contact avec le PVB 7'.

Dans une variante non représentée, on supprime les bandes d'EVA, on fait déborder le film 7 (respectivement le film 7') alors choisi en EVA pour isoler la première entrée de câble (respectivement la deuxième entrée de câble).

Dans une autre variante, on procède au double feuilletage et ensuite on insère les bandes d'EVA et on place le moule avant un chauffage adapté.

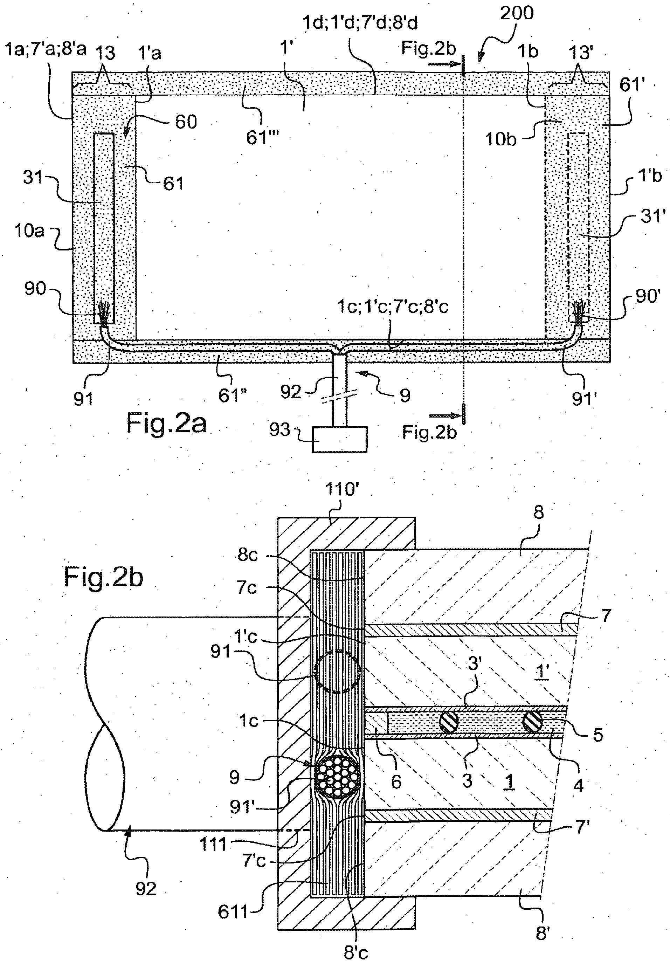

La figure 2a représente une vue schématique de dessus d'un deuxième mode de réalisation du vitrage multiple à diffusion variable par cristaux liquides 200 selon l'invention.

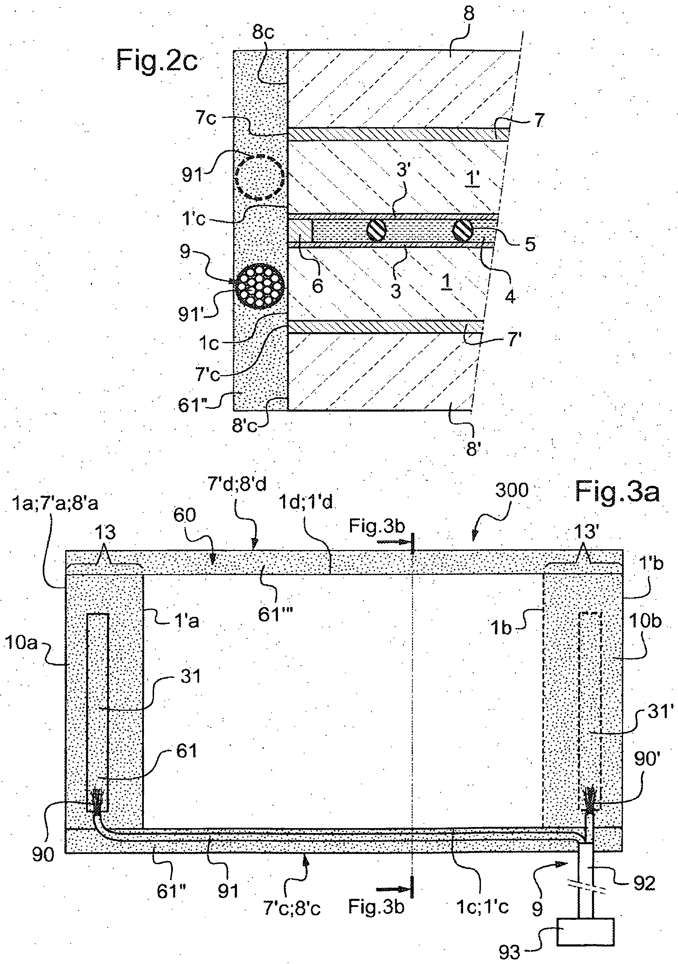

Le vitrage 200 diffère du vitrage 100 d'abord par la formation d'un joint d'étanchéité à l'eau liquide en EVA ceinturant le vitrage, étanchéité à l'eau liquide :
- de la première amenée de courant 31 et de la première électrode dans cette zone d'alimentation, joint 61 remplissant l'ensemble de la première gorge 10a,
- de la deuxième amenée de courant 31' et de la deuxième électrode dans cette zone d'alimentation, joint 61' remplissant l'ensemble de la deuxième gorge 10b,
- d'un premier bord longitudinal, joint 61" le long du chant du vitrage 1c, 1'c, 8c, 8'c (voire aussi la figure 2c),
- d'un deuxième bord longitudinal, joint 61'" le long du chant du vitrage 1d, 1'd, 8d, 8'd.

Sur le premier bord longitudinal comme sur le deuxième bord longitudinal, le joint de scellement peut être espacé des première et deuxième tranches 1, 1' laissant éventuellement les première et deuxième électrodes dépassantes. Aussi, le joint protège de la corrosion toute la surface externe d'électrodes.

En outre, le câblage 9 comprend un seul câble bi-brins 90, 90' le long du premier bord longitudinal du vitrage 200. L'EVA immobilise les deux gaines internes 91, 91'. Le câble électrique est fixé dans une position déterminée unidirectionnelle, linéaire en sortie du vitrage. Le câble sort du vitrage, dans une unique zone avant raccordement au secteur 93.

L'EVA moulé 61 présente une surface externe lisse.

On a qualifié l'étanchéité à l'eau liquide par la détermination du deuxième chiffre de l'indice de protection (IP).

L'indice de protection (IP) est un standard international de la Commission Electrotechnique Internationale. Cet indice classe le niveau de protection qu'offre un matériau aux intrusions de corps solides et liquides. Le format de l'indice, donné par la norme CEI 60529, est IP XY, où le deuxième chiffre Y renseigne sur le niveau de protection contre l'eau avec les conditions résumées dans le tableau 1 ci-dessous.

**Tableau 1**

| Indice | 2^{ème} chiffre pour la Protection contre l'eau |
|---|---|
| 0 | Aucune protection |
| 1 | Protégé contre les chutes verticales de gouttes d'eau |
| 2 | Protégé contre les chutes de gouttes d'eau jusqu'à 15° de la verticale |
| 3 | Protégé contre l'eau en pluie jusqu'à 60° de la verticale |
| 4 | Protégé contre les projections d'eau de toutes directions |
| 5 | Protégé contre les jets d'eau de toutes directions à la lance |
| 6 | Protégé contre les paquets de mer |
| 7 | Protégé contre les effets de l'immersion |

Ce coefficient est défini par exemple dans les normes DIN40050, IEC 529, BS 5490.

Ce vitrage 200 passe le standard IPX7, c'est-à-dire que le vitrage a été mis en fonctionnement en immersion totale dans l'eau (test décrit par la norme IEC 60335-1 :2002). Il s'agit d'une immersion temporaire entre 0,15 m et 1 m. Plus précisément l'essai est effectué en immergeant complètement le vitrage dans l'eau en position de service comme indiqué par le constructeur, de manière à ce que les conditions suivantes soient observées :
a) le vitrage est à 1 m de profondeur en position horizontale et alimenté électriquement,
b) la durée de l'essai est de 30 min,
c) la température de l'eau ne doit pas différer de celle du vitrage de plus de 5 K.

Les entrées de câble 90, 90' noyées ont aussi une meilleure tenue. On peut valider la résistance à l'arrachement du câble par la méthode suivante.

Une marque est faite sur le câble à la sortie du moulage pendant qu'il est soumis à une force de traction de 100 N (10 kg) à une distance d'environ 20 mm de l'entrée de câble. Le câble est soumis à une traction de 100 N pendant 1s sans secousse dans la direction la plus défavorable. L'essai est effectué 25 fois. Puis le câble est soumis à un couple de torsion de 0,35 N.m appliqué le plus près possible de l'entrée du vitrage pendant 1 min. Pendant les essais le câble ne doit pas être endommagé, c'est à-dire sectionné par la torsion. La force de traction est de nouveau appliquée et on ne doit pas avoir de déplacement longitudinal du câble de plus de 2 mm.

La figure 2b représente une vue en coupe latérale schématique et partielle du vitrage multiple à diffusion variable par cristaux liquides de la figure 2a en cours de fabrication.

Le moule 110' diffère du moule 100 en ce qu'il ceinture tout le pourtour du vitrage et on place autant de bandes d'EVA que nécessaire dans les gorges 10a et 10b et de bandes d'EVA 611 le long des bords longitudinaux dans l'espace entre la surface de moulage et les tranches alignées 8c, 1c, 1'c, 8'c.

Le moule 110' est en outre percé de trou(s) 111 sur sa paroi en regard du chant du vitrage pour sortir le câble.

La figure 3a représente une vue schématique de dessus d'un troisième mode de réalisation du vitrage multiple à diffusion variable par cristaux liquides 300.

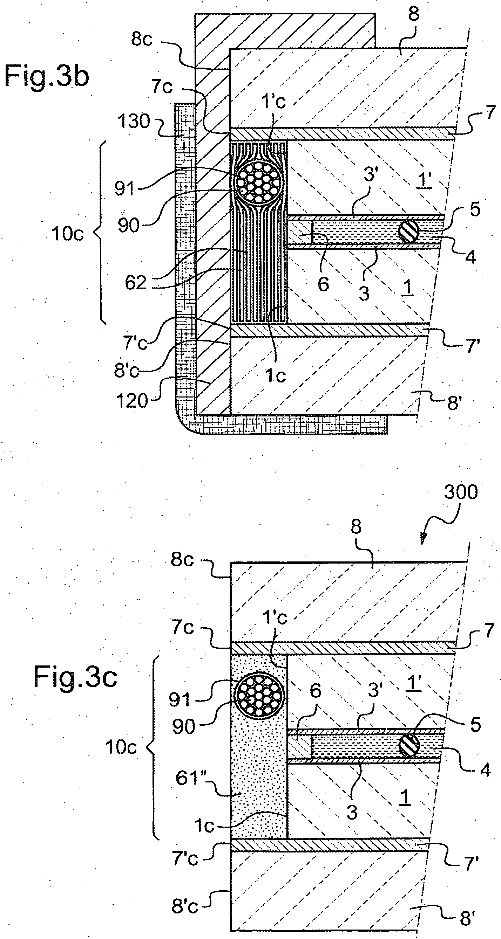

Le vitrage 300 diffère du vitrage 200 en ce que les bords 8c, 8'c des troisième et quatrième tranches, associées au premier bord longitudinal, dépassent des bords 1c, 1'c de première et deuxième tranches forment une gorge périphérique longitudinale 10c logeant le câble bi-brins 9 (voir aussi figure 3c).

Comme montré en figure 3b, le procédé de fabrication présenté diffère de la deuxième réalisation en ce que le moule 120 de section en L, est ouvert, donc seulement sur un bord de la face externe principale de la troisième feuille 8. Une enveloppe 130 (bande de tissu adhésivée par exemple ou fixée par des scotchs) est disposée sur un bord de la face externe principale de la quatrième feuille 8' et s'étend sur le moule 120 pour le capoter.

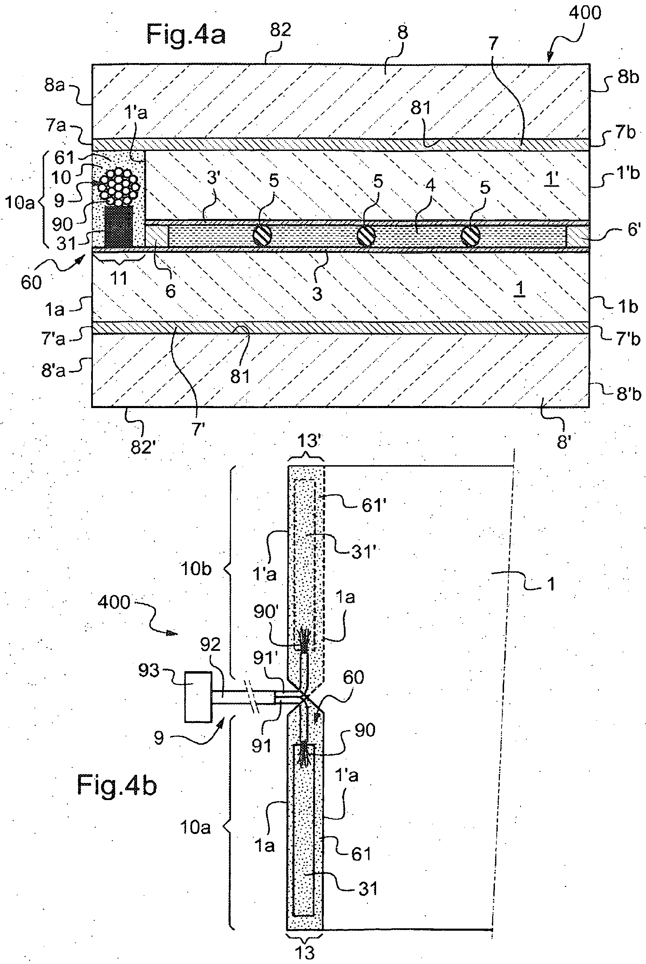

La figure 4a représente une vue en coupe transversale schématique d'un quatrième mode de réalisation du vitrage 400 multiple à diffusion variable par cristaux liquides selon l'invention.

Le vitrage 400 diffère du vitrage 100 en ce que le premier bord dépassant 13 est obtenu par découpe partielle de la deuxième tranche 1'a et l'autre bord dépassant 13' est obtenu par découpe partielle de la première tranche 1a.

Le premier bord dépassant 13 et l'autre bord dépassant 13' sont sur un seul bord longitudinal comme montré en figure 4b.

Les première et deuxième gorges périphériques 10a, 10b sont entièrement remplies par l'EVA 61, 61'.

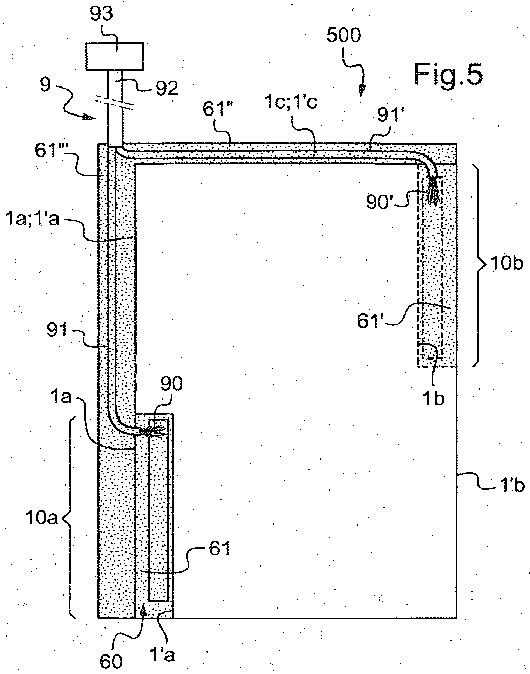

La figure 5 représente une vue schématique de dessus d'un cinquième mode de réalisation du vitrage 500 multiple à diffusion variable par cristaux liquides selon l'invention.

Le vitrage 500 diffère du vitrage 100 en ce que le premier bord dépassant 13 est obtenu par découpe partielle de la deuxième tranche 1'a et l'autre bord dépassant 13' est obtenu par découpe partielle de la première tranche 1a.

Le premier bord dépassant 13 et l'autre bord dépassant 13' sont sur des bords longitudinaux 1a, 1'b et ne sont pas en vis-à-vis.

Les première et deuxième gorges périphériques 10a, 10b sont entièrement remplies par l'EVA 61, 61'.

Le câblage est une seul câble bi-brins 9 immobilisé par de l'EVA 61", 61"' contre la tranche du premier bord longitudinal et d'un deuxième bord latéral 1c, 1'c.

## Revendications

1. Vitrage multiple à diffusion variable par cristaux liquides (100 à 500), avec un chant (1a à 8'c), le vitrage multiple présentant :
- une première feuille de verre (1) avec une face dite première face interne (11) et une autre face dite première face externe (12) et une tranche dite première tranche (1a à à 1d),
- une deuxième feuille de verre (1') avec une face dite deuxième face interne (11') et une autre face dite deuxième face externe (12') et une tranche dite deuxième tranche (1'a à 1'd),
les première et deuxième feuilles de verre (1, 1'), étant scellées par un joint de scellement (6),
- des première et deuxième électrodes (3, 3') respectivement sur les première et deuxième faces internes (11, 11'), sous forme de couches électriquement conductrices transparentes, première et deuxième électrodes dotées respectivement de première et deuxième zones d'alimentation électrique (31, 31'),
- et, sur les première et deuxième électrodes (3, 3'), une couche (4) de cristaux liquides alternant de manière réversible entre un état transparent et un état translucide par application d'un champ électrique alternatif, couche (4) d'épaisseur comprise entre 15 et 60 µm en incluant ces valeurs et incorporant des espaceurs (5),
- la première feuille de verre (1) dépassant d'un bord de la deuxième tranche (1'a), par un premier bord (13) de la première face interne (11), dit premier bord dépassant, et comportant la première zone d'alimentation électrique,
**caractérisé en ce qu'**il comprend :
- un câblage électrique (9, 9') comportant un premier câble (9) avec une première entrée de câblage (90) dans la première zone d'alimentation électrique (31), câblage électrique avec une deuxième entrée de câblage (90'), dans la deuxième zone d'alimentation électrique (31'), lesdites première et deuxième entrées de câblages (90,90') étant des zones de câble (9, 9') sans gaine,
- une première matière d'isolation électrique (61) isolant électriquement la première entrée de câblage (90), polymérique, et éventuellement une deuxième matière d'isolation électrique isolant électriquement la deuxième entrée de câblage (90'), polymérique,
- une troisième feuille de verre (8) feuilletée par la deuxième face externe (12') avec la deuxième feuille de verre (1') par un premier intercalaire de feuilletage (7) en une première matière intercalaire polymérique transparente, la troisième feuille de verre dépassant de la deuxième feuille de verre (1'), par un bord de sa face interne, dit premier bord couvrant (83), couvrant la première matière d'isolation électrique (61),.

2. Vitrage multiple à diffusion variable par cristaux liquides (100 à 500) selon la revendication 1, **caractérisé en ce qu'**il comprend une quatrième feuille de verre (8') feuilletée par la première face externe (12) avec la première feuille de verre (1) par un deuxième intercalaire de feuilletage (7') en une matière polymérique intercalaire transparente, notamment à base d'éthylène-vinyl acétate, de polyvinylbutyral ou de polyuréthane et de préférence identique à la première matière intercalaire (7).

3. Vitrage multiple à diffusion variable par cristaux liquides (100 à 500) selon l'une des revendications 1 ou 2, **caractérisé en ce que** le premier câble électrique (9) avec la première entrée de câblage (90) est sur au moins une partie de sa longueur située au-delà de la première entrée du câblage est logé dans une gorge (10a) formée :
- entre les première et troisième feuilles de verre, notamment entre le premier bord dépassant (13) et le premier bord couvrant (83),
- et/ou entre une autre zone dépassante de la troisième feuille de verre de la première feuille, dite troisième zone, et une zone, dite quatrième zone, d'une quatrième feuille de verre (8') feuilletée par la première face externe (12) avec la première feuille de verre (1) par un deuxième intercalaire de feuilletage (7') en une matière polymérique intercalaire transparente.

4. Vitrage multiple à diffusion variable par cristaux liquides (400, 500) selon l'une des revendications précédentes, **caractérisé en ce que** le premier câble électrique (9) avec la première entrée de câblage (90) est sur au moins une partie de sa longueur située au-delà de la première entrée du câblage (90) comporte une gaine (91), recouverte par une matière polymérique de maintien (61'), matière notamment étanche à l'eau liquide voire vapeur et/ou isolante électrique, de préférence identique voire formant la première matière d'isolation électrique (61), et la gaine étant de préférence figée par la matière de maintien.

5. Vitrage multiple à diffusion variable par cristaux liquides (100, 200, 300, 400, 500) selon l'une des revendications précédentes, **caractérisé en ce que** le premier câble électrique (9) avec la première entrée de câblage (90) est fixé dans une position déterminée unidirectionnelle, en sortie du vitrage voire à partir du dehors de la première entrée de câblage (90) avec la première matière d'isolation électrique (91).

6. Vitrage multiple à diffusion variable par cristaux liquides (200, 300, 400, 500) selon l'une des revendications précédentes, **caractérisé en ce que** le câblage électrique (9) sort du vitrage dans une unique zone de préférence le câblage est constitué d'un unique premier câble électrique (9) qui est bi-brins (90, 90').

7. Vitrage multiple à diffusion variable par cristaux liquides (100, 200, 300, 400, 500) selon l'une des revendications précédentes, **caractérisé en ce que** la première zone d'alimentation électrique comprend une première amenée de courant (31) sur laquelle est fixée la première entrée de câblage (90) et qui est couverte par le premier bord couvrant (83) et éventuellement protégé par la première matière d'isolation électrique (61).

8. Vitrage multiple à diffusion variable par cristaux liquides (100, 200, 300, 400, 500) selon l'une des revendications précédentes, **caractérisé en ce qu'**il comprend un joint d'étanchéité (60) à l'eau liquide, voire vapeur, externe au joint de scellement (6) et formé par une matière polymérique d'étanchéité (61 à 61"'), notamment isolante électrique, le joint d'étanchéité étant agencé pour l'étanchéité de la première entrée de câblage (90), et de préférence d'une éventuelle première amenée de courant (31), et de la première électrode (3) dans la zone extérieure au joint de scellement (6).

9. Vitrage multiple à diffusion variable par cristaux liquides (100, 200, 300, 400, 500) selon la revendication 8, **caractérisé en ce que** la matière d'étanchéité (61 à 61'") forme la première matière d'isolation électrique (61).

10. Vitrage multiple à diffusion variable par cristaux liquides (100, 200, 300, 400, 500) selon l'une des revendications 8 ou 9, **caractérisé en ce que** le joint d'étanchéité (60) est le long d'au moins un bord de la première tranche (1a) et/ou le long d'une gorge périphérique (10) ménagée dans le vitrage notamment entre le premier bord dépassant (13) et le premier bord couvrant (83).

11. Vitrage multiple à diffusion variable par cristaux liquides (200) selon l'une des revendications 8 à 10, **caractérisé en ce que** le joint d'étanchéité à l'eau (60) est sur tout le pourtour du vitrage, contre le chant du vitrage et/ou dans une ou des gorges périphériques ménagées dans le vitrage, et le joint d'étanchéité à l'eau borde éventuellement le câblage électrique (9, 91, 91').

12. Vitrage multiple à diffusion variable par cristaux liquides (100, 200, 300, 400, 500) selon l'une des revendications 8 à 11, **caractérisé en ce que** la matière d'étanchéité (61 à 61"') qui forme éventuellement la première matière d'isolation électrique (61) et/ou qui forme éventuellement une matière de maintien du câblage électrique (61") est réticulée.

13. Vitrage multiple à diffusion variable par cristaux liquides (100, 200, 300, 400, 500) selon l'une des revendications 1 à 12, **caractérisé en ce que** la première matière d'isolation électrique (61) et/ou la matière d'étanchéité à l'eau (61 à 61"') et/ou une matière de maintien du câblage électrique (61") est en silicone ou à base d'éthylène-vinyl acétate notamment réticulée.

14. Vitrage multiple à diffusion variable par cristaux liquides (100, 200, 300, 400, 500) selon l'une des revendications précédentes, **caractérisé en ce que** la première matière intercalaire (7) est à base d'éthylène-vinyl acétate, de polyvinylbutyral ou de polyuréthane.

15. Vitrage multiple à diffusion variable par cristaux liquides (100, 200, 300, 400, 500) selon l'une des revendications 1 à 16, **caractérisé en ce que** la deuxième feuille de verre (1') dépasse d'un bord de tranche de la première feuille de verre (1 b), par un bord de la deuxième face interne dit autre bord dépassant (13'), comportant la deuxième zone d'alimentation électrique (31'), et **en ce que** le vitrage comprend :
- une deuxième matière d'isolation électrique (61') isolant électriquement la deuxième entrée de câblage (90'), polymérique,
- une quatrième feuille de verre (8') feuilletée par la première face externe (12) avec la première feuille de verre (1) par un deuxième intercalaire de feuilletage (7') en une matière polymérique transparente, la quatrième feuille de verre dépassant de la première feuille de verre (1), par un bord de sa face interne, couvrant la deuxième matière d'isolation électrique, dit autre bord couvrant (83').

16. Procédé de fabrication d'un vitrage multiple à diffusion variable par cristaux liquides (100 à 500) selon l'une des revendications précédentes de vitrage comportant les étapes suivantes dans cet ordre :
- avant ou après formation du joint de scellement (6), un dépôt par voie liquide d'une composition de cristaux liquides sur la première feuille de verre (1) dotée de la première électrode (3),
- un assemblage des première et deuxième feuilles de verre (1, 1') de façon à former le premier bord dépassant (13),
- une insolation des cristaux liquides pour former la couche de cristaux liquides (4), **caractérisé en ce qu'**il comprend en outre :
- une liaison de la première entrée de câblage (90) à la première électrode (3) dans la première zone d'alimentation électrique (31),
- une isolation électrique de la première entrée de câblage par la première matière d'isolation électrique polymérique (61), et éventuellement isolation électrique de la deuxième entrée de câblage par la deuxième matière d'isolation électrique polymérique (61),
- un feuilletage de la troisième feuille de verre (8) avec la deuxième feuille de verre (1') par le premier intercalaire de feuilletage (7) de façon à former le premier bord couvrant (83),
- un éventuel autre feuilletage d'une quatrième feuille de verre (8') avec la première feuille de verre (1) par le deuxième intercalaire de feuilletage (7') de façon à former l'autre bord couvrant (83').

17. Procédé de fabrication d'un vitrage multiple à diffusion variable par cristaux liquides selon la revendication précédente de procédé **caractérisé en ce que** le feuilletage avec la première matière intercalaire de feuilletage (7) implique le placement du vitrage dans un autoclave.

18. Procédé de fabrication d'un vitrage multiple à diffusion variable par cristaux liquides selon l'une des revendications 16 à 17 **caractérisé en ce que** ladite isolation électrique comprend:
- une insertion de la première matière d'isolation électrique (610), sur le premier bord dépassant (13),
- le placement d'un moule (110, 110', 120) en regard avec la première tranche (1a) et la tranche de la troisième feuille de verre, dite troisième tranche, et avec une surface interne de moulage en regard d'une gorge (10a) entre le premier bord dépassant (13) et le premier bord couvrant (83) incluant la première matière d'isolation électrique (61),
- un chauffage fluidifiant la première matière polymérique d'isolation électrique (61) de sorte que la première matière d'isolation électrique épouse la surface interne de moulage et remplisse la gorge (10a).

19. Procédé de fabrication d'un vitrage multiple à diffusion variable par cristaux liquides selon la revendication 18 **caractérisé en ce que** ledit chauffage fluidifie en outre la première matière intercalaire (7) notamment en EVA pour réaliser ledit feuilletage de préférence pendant le même cycle thermique.

20. Procédé de fabrication d'un vitrage multiple à diffusion variable par cristaux liquides selon l'une des revendications 18 à 19 **caractérisé en ce que** le moule (110, 110', 120) est en appui sur le vitrage au moins par une face principale externe du vitrage (82, 82') et le moule est éventuellement en butée contre la première tranche (1a) et la troisième tranche (8a), le moule ceinturant éventuellement le pourtour du vitrage (1a à 1d, 1'a à 1'd).

21. Procédé de fabrication d'un vitrage multiple à diffusion variable par cristaux liquides selon l'une des revendications précédentes de procédé **caractérisé en ce qu'**il comprend une immobilisation du premier câble électrique (9) voire d'un éventuel deuxième câble électrique (9') incluant de préférence une insertion de la matière de maintien (611, 62) sur le premier câble et dans le moule (110'), le chauffage fluidifiant la matière polymérique de maintien, notamment en EVA de sorte que la matière de maintien épouse la surface de moulage et fige le premier câble électrique.

22. Procédé de fabrication d'un vitrage multiple à diffusion variable par cristaux liquides selon l'une des revendications précédentes de procédé **caractérisé en ce qu'**il comprend une formation du joint d'étanchéité (60) à l'eau liquide, voire vapeur, externe au joint de scellement (6) incluant de préférence une insertion dans le moule (110, 110', 120) de la matière d'étanchéité à l'eau (610, 611, 62), de la première entrée de câblage (91), de la première électrode (3), de l'éventuelle première amenée de courant (31), voire de la deuxième entrée de câblage (91'), de la deuxième électrode (3'), de l'éventuelle deuxième amenée de courant (31'), le chauffage fluidifiant la matière polymérique d'étanchéité notamment en EVA de sorte que la matière de maintien épouse la surface de moulage et adhère au verre.

23. Procédé de fabrication d'un vitrage multiple à diffusion variable par cristaux liquides selon la revendication précédente **caractérisé en ce que** le moule (110, 110', 120) comportant la matière de maintien est ouvert ou percé de trou(s) (111) sur sa paroi en regard du chant (1c, 1'c) du vitrage pour sortir le premier câble (91) et/ou le moule (110) est ouvert sur au moins un côté pour sortir le câblage.

24. Procédé de fabrication d'un vitrage multiple à diffusion variable par cristaux liquides selon l'une des revendications précédentes de procédé **caractérisé en ce que** l'isolation électrique, l'immobilisation du premier câble (91) et/ou la formation du joint d'étanchéité (60), notamment avec le moule (110, 110', 120), comporte une étape de chauffage simultané et de préférence à partir d'une unique matière (61 à 61"'), de préférence en EVA.

## Patentansprüche

1. Mehrfachverglasung mit variabler Streuung durch Flüssigkristalle (100 bis 500), mit einer Kante (1a bis 8'c), wobei die Mehrfachverglasung Folgendes aufweist:
- eine erste Glasscheibe (1) mit einer Fläche, so genannte erste Innenfläche (11), und einer weiteren Fläche, so genannte erste Außenfläche (12), und einer Kante, so genannte erste Kante (1a bis 1d),
- eine zweite Glasscheibe (1') mit einer Fläche, so genannte zweite Innenfläche (11'), und einer weiteren Fläche, so genannte zweite Außenfläche (12'), und einer Kante, so genannte zweite Kante (1'a bis 1'd),
wobei die erste und zweite Glasscheibe (1, 1') durch eine Versiegelungsnaht (6) versiegelt sind,
- erste und zweite Elektroden (3, 3') auf der ersten bzw. zweiten Innenfläche (11, 11') in Form von transparenten, elektrisch leitfähigen Schichten, wobei die erste und zweite Elektrode mit einer ersten bzw. zweiten elektrischen Versorgungszone (31, 31') versehen sind,
- und, auf der ersten und zweiten Elektrode (3, 3'), eine Schicht (4) aus Flüssigkristallen, die durch Anlegen eines elektrischen Wechselfeldes reversibel alternieren zwischen einem transparenten Zustand und einem durchscheinenden Zustand, Schicht (4) mit einer Dicke zwischen 15 und 60 µm inklusive dieser Werte, und mit Distanzstücken (5),
- wobei ein erster Rand (13) der ersten Innenfläche (11) der erste Glasscheibe (1), so genannter erster Überstandsrand, über einen Rand der zweiten Kante (1'a) übersteht und die erste elektrische Versorgungszone aufweist,
**dadurch gekennzeichnet, dass** sie Folgendes umfasst:
- eine elektrische Verkabelung (9, 9'), die ein erstes Kabel (9) aufweist mit einem ersten Verkabelungseingang (90) in der ersten elektrischen Versorgungszone (31), elektrische Verkabelung mit einem zweiten Verkabelungseingang (90'), in der zweiten elektrischen Versorgungszone (31'), wobei der erste und zweite Verkabelungseingang (90, 90') Kabelzonen (9, 9') ohne Mantel sind,
- ein erstes elektrisches Isolierungsmaterial (61), das den ersten Verkabelungseingang (90) elektrisch isoliert, polymerisch, und gegebenenfalls ein zweites elektrisches Isolierungsmaterial, das den zweiten Verkabelungseingang (90') elektrisch isoliert, polymerisch,
- eine dritte Glasscheibe (8), die über die zweite Außenfläche (12') mit der zweiten Glasscheibe (1') durch eine erste Verbundzwischenlage (7) aus einem ersten transparenten, polymerischen Zwischenlagenmaterial verbunden ist, wobei die dritte Glasscheibe über einen Rand ihrer Innenfläche, so genannter Abdeckrand (83), über die zweite Glasscheibe (1') übersteht und das erste elektrische Isolierungsmaterial (61) abdeckt.

2. Mehrfachverglasung mit variabler Streuung durch Flüssigkristalle (100 bis 500) nach Anspruch 1, **dadurch gekennzeichnet, dass** sie eine vierte Glasscheibe (8') umfasst, die über die erste Außenfläche (12) mit der ersten Glasscheibe (1) durch eine zweite Verbundzwischenlage (7') aus einem transparenten, polymerischen Zwischenlagenmaterial verbunden ist, insbesondere auf Basis von Ethylenvinylacetat, von Polyvinylbutyral oder von Polyurethan und vorzugsweise identisch mit dem ersten Zwischenlagenmaterial (7).

3. Mehrfachverglasung mit variabler Streuung durch Flüssigkristalle (100 bis 500) nach einem der Ansprüche 1 oder 2, **dadurch gekennzeichnet, dass** das erste elektrische Kabel (9) mit dem ersten Verkabelungseingang (90) über mindestens einen Teil seiner Länge, der sich jenseits des ersten Verkabelungseingangs befindet, in einer Rille (10a) aufgenommen ist, die gebildet ist:
- zwischen der ersten und dritte Glasscheibe, insbesondere zwischen dem ersten Überstandsrand (13) und dem ersten Abdeckrand (83),
- und/oder zwischen einer weiteren Überstandszone der dritten Glasscheibe der ersten Scheibe, so genannte dritte Zone, und einer Zone, so genannte vierte Zone, einer vierten Glasscheibe (8'), die über die erste Außenfläche (12) mit der ersten Glasscheibe (1) durch eine zweite Verbundzwischenlage (7') aus einem transparenten, polymerischen Zwischenlagenmaterial verbunden ist.

4. Mehrfachverglasung mit variabler Streuung durch Flüssigkristalle (400, 500) nach einem der vorhergehenden Ansprüche, **dadurch gekennzeichnet, dass** das erste elektrische Kabel (9) mit dem ersten Verkabelungseingang (90) über mindestens einen Teil seiner Länge, der sich jenseits des ersten Verkabelungseingangs (90) befindet, einen Mantel (91) aufweist, der mit einem polymerischen Haltematerial (61') beschichtet ist, Material, das insbesondere gegenüber flüssigem Wasser oder sogar Dampf dicht und/oder elektrisch isolierend ist, vorzugsweise identisch oder sogar das erste elektrische Isolierungsmaterial (61) bildend, und wobei der Mantel vorzugsweise durch das Haltematerial zum Koagulieren gebracht ist.

5. Mehrfachverglasung mit variabler Streuung durch Flüssigkristalle (100, 200, 300, 400, 500) nach einem der vorhergehenden Ansprüche, **dadurch gekennzeichnet, dass** das erste elektrische Kabel (9) mit dem ersten Verkabelungseingang (90) in einer bestimmten unidirektionalen Position festgelegt ist, am Ausgang der Verglasung oder sogar von der Außenseite her des ersten Verkabelungseingangs (90) mit dem ersten elektrischen Isolierungsmaterial (**61**).

6. Mehrfachverglasung mit variabler Streuung durch Flüssigkristalle (200, 300, 400, 500) nach einem der vorhergehenden Ansprüche, **dadurch gekennzeichnet, dass** die elektrische Verkabelung (9) aus der Verglasung in einer einzigen Vorzugszone austritt, wobei die Verkabelung aus einem einzigen ersten elektrischen Kabel (9) besteht, das zweiadrig (90, 90') ist.

7. Mehrfachverglasung mit variabler Streuung durch Flüssigkristalle (100, 200, 300, 400, 500) nach einem der vorhergehenden Ansprüche, **dadurch gekennzeichnet, dass** die erste elektrische Versorgungszone eine erste Stromzuleitung (31) umfasst, an welcher der erste Verkabelungseingang (90) befestigt ist und die durch den ersten Abdeckrand (83) abgedeckt und gegebenenfalls durch das erste elektrische Isolierungsmaterial (61) geschützt ist.

8. Mehrfachverglasung mit variabler Streuung durch Flüssigkristalle (100, 200, 300, 400, 500) nach einem der vorhergehenden Ansprüche, **dadurch gekennzeichnet, dass** sie ein Dichtungselement (60) gegenüber flüssigem Wasser oder sogar Dampf umfasst, Versiegelungsnahts- (6) extern und durch ein polymerisches Abdichtungsmaterial (61 bis 61"'), insbesondere elektrisch isolierend, gebildet, wobei das Dichtungselement für die Abdichtung des ersten Verkabelungseingangs (90), und vorzugsweise einer etwaigen ersten Stromzuleitung (31), und der ersten Elektrode (3) in der Zone außerhalb der Versiegelungsnaht (6) vorgesehen ist.

9. Mehrfachverglasung mit variabler Streuung durch Flüssigkristalle (100, 200, 300, 400, 500) nach Anspruch 8, **dadurch gekennzeichnet, dass** das Abdichtungsmaterial (61 bis 61"') das erste elektrische Isolierungsmaterial (61) bildet.

10. Mehrfachverglasung mit variabler Streuung durch Flüssigkristalle (100, 200, 300, 400, 500) nach einem der Ansprüche 8 oder 9, **dadurch gekennzeichnet, dass** das Dichtungselement (60) entlang mindestens eines Rands der ersten Kante (1a) und/oder entlang einer umlaufenden Rille (10) ist, die in der Verglasung insbesondere zwischen dem ersten Überstandsrand (13) und dem ersten Abdeckrand (83) vorgesehen ist.

11. Mehrfachverglasung mit variabler Streuung durch Flüssigkristalle (200) nach einem der Ansprüche 8 bis 10, **dadurch gekennzeichnet, dass** das Dichtungselement gegenüber Wasser (60) über den gesamten Umfang der Verglasung, gegen die Kante der Verglasung und/oder in einer oder in umlaufenden Rillen ist, die in der Verglasung vorgesehen sind, und das Dichtungselement gegenüber Wasser gegebenenfalls die elektrische Verkabelung (9, 91, 91') umsäumt.

12. Mehrfachverglasung mit variabler Streuung durch Flüssigkristalle (100, 200, 300, 400, 500) nach einem der Ansprüche 8 bis 11, **dadurch gekennzeichnet, dass** das Abdichtungsmaterial (61 bis 61'"), das gegebenenfalls das erste elektrische Isolierungsmaterial (61) bildet und/oder das gegebenenfalls ein Haltematerial der elektrischen Verkabelung (61") bildet, vernetzt ist.

13. Mehrfachverglasung mit variabler Streuung durch Flüssigkristalle (100, 200, 300, 400, 500) nach einem der Ansprüche 1 bis 12, **dadurch gekennzeichnet, dass** das erste elektrische Isolierungsmaterial (61) und/oder das Abdichtungsmaterial (61 bis 61'") gegenüber Wasser und/oder ein Haltematerial der elektrischen Verkabelung (61") aus Silikon oder auf Basis von Ethylenvinylacetat, insbesondere vernetzt, ist.

14. Mehrfachverglasung mit variabler Streuung durch Flüssigkristalle (100, 200, 300, 400, 500) nach einem der vorhergehenden Ansprüche, **dadurch gekennzeichnet, dass** das erste Zwischenlagenmaterial (7) auf Basis von Ethylenvinylacetat, von Polyvinylbutyral oder von Polyurethan ist.

15. Mehrfachverglasung mit variabler Streuung durch Flüssigkristalle (100, 200, 300, 400, 500) nach einem der Ansprüche 1 bis 16, **dadurch gekennzeichnet, dass** die zweite Glasscheibe (1') über einen Rand der zweiten Innenfläche, so genannter anderer Überstandsrand (13'), über einen Kantenrand der ersten Glasscheibe (1b) übersteht und die zweite elektrische Versorgungszone (31') aufweist, und dadurch, dass die Verglasung Folgendes umfasst:
- ein zweites elektrisches Isolierungsmaterial (61'), das den zweiten Verkabelungseingang (90') elektrisch isoliert, polymerisch,
- eine vierte Glasscheibe (8'), die über die erste Außenfläche (12) mit der ersten Glasscheibe (1) durch eine zweite Verbundzwischenlage (7') aus einem transparenten, polymerischen Material verbunden ist, wobei die vierte Glasscheibe, über einen Rand ihrer Innenfläche, der das zweite elektrische Isolierungsmaterial abdeckt, so genannter anderer Abdeckrand (83'), über die erste Glasscheibe (1) übersteht.

16. Verfahren zur Herstellung einer Mehrfachverglasung mit variabler Streuung durch Flüssigkristalle (100 bis 500) nach einem der vorhergehenden Verglasungsansprüche, das die folgenden Schritte in dieser Reihenfolge aufweist:
- vor oder nach Bilden der Versiegelungsnaht (6) Abscheiden in flüssiger Form einer Flüssigkristallzusammensetzung auf der ersten Glasscheibe (1), die mit der ersten Elektrode (3) versehen ist,
- Zusammenfügen der ersten und zweiten Glasscheibe (1, 1'), so dass der erste Überstandsrand (13) gebildet wird,
- Sonnenbestrahlen der Flüssigkristalle, um die Flüssigkristallschicht (4) zu bilden,
**dadurch gekennzeichnet, dass** es ferner Folgendes umfasst:
- Verbinden des ersten Verkabelungseingangs (90) mit der ersten Elektrode (3) in der ersten elektrischen Versorgungszone (31),
- elektrisches Isolieren des ersten Verkabelungseingangs durch das erste polymerische elektrische Isolierungsmaterial (61) und gegebenenfalls elektrisches Isolieren des zweiten Verkabelungseingangs durch das zweite polymerische elektrische Isolierungsmaterial (61),
- Verbinden der dritten Glasscheibe (8) mit der zweiten Glasscheibe (1') durch die erste Verbundzwischenlage (7), so dass der erste Abdeckrand (83) gebildet wird.
- etwaiges weiteres Verbinden einer vierten Glasscheibe (8') mit der ersten Glasscheibe (1) durch die zweite Verbundzwischenlage (7'), so dass der andere Abdeckrand (83') gebildet wird.

17. Verfahren zur Herstellung einer Mehrfachverglasung mit variabler Streuung durch Flüssigkristalle nach dem vorhergehenden Verfahrensanspruch, **dadurch gekennzeichnet, dass** das Verbinden mit dem ersten Verbundzwischenlagenmaterial (7) das Platzieren der Verglasung in einem Autoklaven impliziert.

18. Verfahren zur Herstellung einer Mehrfachverglasung mit variabler Streuung durch Flüssigkristalle nach einem der Ansprüche 16 bis 17, **dadurch gekennzeichnet, dass** das elektrische Isolieren Folgendes umfasst:
- Einbringen des ersten elektrischen Isolierungsmaterials (610), an dem ersten Überstandsrand (13),
- Platzieren eines Formwerkzeugs (110, 110', 120) der ersten Kante (1a) und der Kante der dritten Glasscheibe, so genannte dritte Kante, gegenüber, und mit einer inneren Formungsfläche einer Rille (10a) zwischen dem ersten Überstandsrand (13) und dem ersten Abdeckrand (83) gegenüber, die das erste elektrische Isolierungsmaterial (61) enthält,
- Erhitzen zum Fluidisieren des ersten polymerischen elektrischen Isolierungsmaterials (61), so dass sich das erste elektrische Isolierungsmaterial an die innere Formungsfläche anlegt und die Rille (10a) füllt.

19. Verfahren zur Herstellung einer Mehrfachverglasung mit variabler Streuung durch Flüssigkristalle nach Anspruch 18, **dadurch gekennzeichnet, dass** das Erhitzen ferner das erste Zwischenlagenmaterial (7) insbesondere aus EVA fluidisiert, um die Vorzugsverbindung während des gleichen thermischen Zyklus zu realisieren.

20. Verfahren zur Herstellung einer Mehrfachverglasung mit variabler Streuung durch Flüssigkristalle nach einem der Ansprüche 18 bis 19, **dadurch gekennzeichnet, dass** das Formwerkzeug (110, 110', 120) sich an der Verglasung mindestens über eine Verglasungs-externe Hauptfläche (82, 82') abstützt und das Formwerkzeug gegebenenfalls gegen die erste Kante (1a) und die dritte Kante (8a) in Anschlag ist, wobei das Formwerkzeug gegebenenfalls den Umfang der Verglasung (1a bis 1d, 1'a bis 1'd) umgibt.

21. Verfahren zur Herstellung einer Mehrfachverglasung mit variabler Streuung durch Flüssigkristalle nach einem der vorhergehenden Verfahrensansprüche, **dadurch gekennzeichnet, dass** es ein Festlegen des ersten elektrischen Kabels (9) oder sogar eines etwaigen zweiten elektrischen Kabels (9') umfasst, das vorzugsweise ein Einbringen des Haltematerials (611, 62) an dem ersten Kabel und in das Formwerkzeug (110') enthält, wobei das Erhitzen das polymerische Haltematerial, insbesondere aus EVA fluidisiert, so dass das Haltematerial sich an die Formungsoberfläche anlegt und das erste elektrische Kabel zum Koagulieren bringt.

22. Verfahren zur Herstellung einer Mehrfachverglasung mit variabler Streuung durch Flüssigkristalle nach einem der vorhergehenden Verfahrensansprüche, **dadurch gekennzeichnet, dass** es ein Bilden des Dichtungselements (60) gegenüber Wasser, oder sogar Dampf, Versiegelungsnahts- (6) extern umfasst, das vorzugsweise ein Einbringen in das Formwerkzeug (110, 110', 120) von Abdichtungsmaterial (610, 611, 62) gegenüber Wasser, des ersten Verkabelungseingangs (91), der ersten Elektrode (3), der etwaigen ersten Stromzuleitung (31), oder sogar des zweiten Verkabelungseingangs (91'), der zweiten Elektrode (3'), der etwaigen zweiten Stromzuleitung (31') enthält, wobei das Erhitzen das polymerische Abdichtungsmaterial, insbesondere aus EVA fluidisiert, so dass das Haltematerial sich an die Formungsoberfläche anlegt und an dem Glas anhaftet.

23. Verfahren zur Herstellung einer Mehrfachverglasung mit variabler Streuung durch Flüssigkristalle nach dem vorhergehenden Anspruch, **dadurch gekennzeichnet, dass** das Formwerkzeug (110, 110', 120) mit dem Haltematerial an seiner Wand der Kante (1c, 1'c) der Verglasung gegenüber offen ist oder mit einem Loch/Löchern (111) versehen ist, um das erste Kabel (91) auszulassen, und/oder das Formwerkzeug (110) an mindestens einer Seite offen ist, um die Verkabelung auszulassen.

24. Verfahren zur Herstellung einer Mehrfachverglasung mit variabler Streuung durch Flüssigkristalle nach einem der vorhergehenden Verfahrensansprüche, **dadurch gekennzeichnet, dass** das elektrische Isolieren, das Festlegen des ersten Kabels (91) und/oder das Bilden des Dichtungselements (60), insbesondere mit dem Formwerkzeug (110, 110', 120), einen Schritt des gleichzeitigen Erhitzens und vorzugsweise aus einem einzigen Material (61 bis 61'"), vorzugsweise aus EVA, aufweist.

## Claims

1. Multiple glazing with variable liquid-crystal-induced scattering (100 to 500), with an edge face (1a to 8'c), the multiple glazing having:
- a first glass sheet (1) with a face referred to as the first inner face (11) and another face referred to as the first outer face (12) and an edge referred to as the first edge (1a to 1d),
- a second glass sheet (1') with a face referred to as the second inner face (11') and another face referred to as the second outer face (12') and an edge referred to as the second edge (1'a to 1'd),
the first and second glass sheets (1, 1') being sealed by a sealing gasket (6),
- first and second electrodes (3, 3') respectively on the first and second inner faces (11, 11'), in the form of transparent electrically conductive layers, which first and second electrodes are provided respectively with first and second electricity supply zones (31,31'),
- and, on the first and second electrodes (3, 3'), a layer (4) of liquid crystals alternating reversibly between a transparent state and a translucent state by application of an alternating electric field, which layer (4) has a thickness between 15 and 60 µm inclusive of these values and incorporates spacers (5),
- the first glass sheet (1) protruding from one side of the second edge (1'a) by a first side (13) of the first inner face (11), referred to as the first protruding side, and comprising the first electricity supply zone,
**characterized in that** it comprises:
- electrical cabling (9, 9') comprising a first cable (9) with a first cabling input (90) in the first electricity supply zone (31), electrical cabling with a second cabling input (90') in the second electricity supply zone (31'), said first and second cabling inputs (90, 90') being sheathless cabling zones (9, 9'),
- a first electrically insulating polymer material (61) for electrically insulating the first cabling input (90), and optionally a second electrically insulating polymer material for electrically insulating the second cabling input (90'),
- a third glass sheet (8) laminated by the second outer face (12') with the second glass sheet (1') by a first lamination interlayer (7) made of a first transparent polymer interlayer material, the third glass sheet protruding from the second glass sheet (1') via one side of its inner face, referred to as the first covering side (83), covering the first electrically insulating material (61).

2. Multiple glazing with variable liquid-crystal-induced scattering (100 to 500) according to Claim 1, **characterized in that** it comprises a fourth glass sheet (8') laminated by the first outer face (12) with the first glass sheet (1) by a second lamination interlayer (7') made of a transparent interlayer polymer material, in particular based on ethylene/vinyl acetate, polyvinyl butyral or polyurethane and that is preferably identical to the first interlayer material (7).

3. Multiple glazing with liquid-crystal-induced variable scattering (100 to 500) according to either of Claims 1 and 2, **characterized in that** the first electrical cable (9) with the first cabling input (90) is over at least one portion of its length located beyond the first cabling input and is housed in a groove (10a) formed:
- between the first and third glass sheets, in particular between the first protruding side (13) and the first covering side (83),
- and/or between another protruding zone of the third glass sheet of the first sheet, referred to as the third zone, and a zone, referred to as the fourth zone, of a fourth glass sheet (8') laminated by the first outer face (12) with the first glass sheet (1) by a second lamination interlayer (7') made of a transparent interlayer polymer material.

4. Multiple glazing with liquid-crystal-induced variable scattering (400, 500) according to one of the preceding claims, **characterized in that** the first electrical cable (9) with the first cabling input (90) is over at least one portion of its length located beyond the first cabling input (90) and comprises a sheath (91), covered with a supporting polymer material (61'), which material is in particular impermeable to liquid water or even steam and/or is electrically insulating, preferably identical to or even forming the first electrically insulating material (61), and the sheath preferably being solidified by the support material.

5. Multiple glazing with variable liquid-crystal-induced scattering (100, 200, 300, 400, 500) according to one of the preceding claims, **characterized in that** the first electrical cable (9) with the first cabling input (90) is fixed in a given unidirectional position, leaving the glazing or even starting from outside of the first cabling input (90) with the first electrically insulating material (91).

6. Multiple glazing with variable liquid-crystal-induced scattering (200, 300, 400, 500) according to one of the preceding claims, **characterized in that** the electrical cabling (9) leaves the glazing in a single zone, preferably the cabling consists of a single first electrical cable (9) which is a two-wire (90, 90') cable.

7. Multiple glazing with variable liquid-crystal-induced scattering (100, 200, 300, 400, 500) according to one of the preceding claims, **characterized in that** the first electricity supply zone comprises a first current feed (31) to which the first cabling input (90) is attached and which is covered with the first covering side (83) and optionally protected by the first electrically insulating material (61).

8. Multiple glazing with variable liquid-crystal-induced scattering (100, 200, 300, 400, 500) according to one of the preceding claims, **characterized in that** it comprises a seal (60) impermeable to liquid water or even to steam, outside of the sealing gasket (6) and formed by an impermeable polymer material (61 to 61"'), in particular that is electrically insulating, the impermeable seal being arranged for the impermeability of the first cabling input (90) and preferably of an optional first current feed (31), and of the first electrode (3) in the zone exterior to the sealing gasket (6).

9. Multiple glazing with variable liquid-crystal-induced scattering (100, 200, 300, 400, 500) according to Claim 8, **characterized in that** the impermeable material (61 to 61"') forms the first electrically insulating material (61).

10. Multiple glazing with variable liquid-crystal-induced scattering (100, 200, 300, 400, 500) according to either of Claims 8 and 9, **characterized in that** the impermeable seal (60) is along at least one side of the first edge (1a) and/or along a peripheral groove (10) made in the glazing in particular between the first protruding side (13) and the first covering side (83).

11. Multiple glazing with variable liquid-crystal-induced scattering (200) according to one of Claims 8 to 10, **characterized in that** the water-impermeable seal (60) is over the entire perimeter of the glazing, between the edge face of the glazing and/or in one or more peripheral grooves made in the glazing, and the water-impermeable seal optionally borders the electrical cabling (9, 91, 91').

12. Multiple glazing with variable liquid-crystal-induced scattering (100, 200, 300, 400, 500) according to one of Claims 8 to 11, **characterized in that** the impermeable material (61 to 61"') which optionally forms the first electrically insulating material (61) and/or which optionally forms a support material for the electrical cabling (61") is crosslinked.

13. Multiple glazing with variable liquid-crystal-induced scattering (100, 200, 300, 400, 500) according to one of Claims 1 to 12, **characterized in that** the first electrically insulating material (61) and/or the water-impermeable material (61 to 61"') and/or a support material for the electrical cabling (61") is made of silicone or based on ethylene/vinyl acetate, in particular which is crosslinked.

14. Multiple glazing with variable liquid-crystal-induced scattering (100, 200, 300, 400, 500) according to one of the preceding claims, **characterized in that** the first interlayer material (7) is based on ethylene/vinyl acetate, polyvinyl butyral or polyurethane.

15. Multiple glazing with variable liquid-crystal-induced scattering (100, 200, 300, 400, 500) according to one of Claims 1 to 16, **characterized in that** the second glass sheet (1') protrudes over an edge face side of the first glass sheet (1b) by a side of the second inner face referred to as the other protruding side (13'), comprising the second electricity supply zone (31'), and **in that** the glazing comprises:
- a second electrically insulating polymer material (61') for electrically insulating the second cabling input (90'),
- a fourth glass sheet (8') laminated by the first outer face (12) with the first glass sheet (1) by a second lamination interlayer (7') made of a transparent polymer material, the fourth glass sheet protruding over the first glass sheet (1), by one side of its inner face, covering the second electrically insulating material, referred to as the other covering side (83').

16. Process for manufacturing a multiple glazing with variable liquid-crystal-induced scattering (100 to 500) according to one of the preceding glazing claims, comprising the following steps in this order:
- before or after forming the sealing gasket (6), a liquid deposition of a liquid-crystal composition on the first glass sheet (1) provided with a first electrode (3),
- assembling the first and second glass sheets (1, 1') so as to form the first protruding side (13),
- exposing the liquid crystals to light in order to form the liquid-crystal layer (4),
**characterized in that** it also comprises:
- a link from the first cabling input (90) to the first electrode (3) in the first electricity supply zone (31),
- electrical insulation of the first cabling input by the first electrically insulating polymer material (61), and optionally electrical insulation of the second cabling input by the second electrically insulating polymer material (61),
- lamination of the third glass sheet (8) with the second glass sheet (1') by the first lamination interlayer (7) so as to form the first covering side (83),
- an optional other lamination of a fourth glass sheet (8') with the first glass sheet (1) by the second lamination interlayer (7') so as to form the other covering side (83').

17. Process for manufacturing a multiple glazing with variable liquid-crystal-induced scattering according to the preceding process claim, **characterized in that** the lamination with the first lamination interlayer material (7) involves placing the glazing in an autoclave.

18. Process for manufacturing a multiple glazing with variable liquid-crystal-induced scattering according to either of Claims 16 and 17, **characterized in that** said electrical insulation comprises:
- an insertion of the first electrically insulating material (610) over the first protruding side (13),
- placing a mold (110, 110', 120) opposite with the first edge face (1a) and the edge face of the third glass sheet, referred to as the third edge face, and with an inner molding surface opposite a groove (10a) between the first protruding side (13) and the first covering side (83) including the first electrically insulating material (61),
- heating that fluidizes the first electrically insulating polymer material (61) so that the first electrically insulating material adopts the inner molding surface and fills the groove (10a).

19. Process for manufacturing a multiple glazing with variable liquid-crystal-induced scattering according to Claim 18, **characterized in that** said heating also fluidizes the first interlayer material (7) in particular made of EVA in order to produce said lamination, preferably during the same thermal cycle.

20. Process for manufacturing a multiple glazing with variable liquid-crystal-induced scattering according to either of Claims 18 and 19, **characterized in that** the mold (110, 110', 120) presses against the glazing at least via a main outer face of the glazing (82, 82') and the mold optionally butts against the first edge face (1a) and the third edge face (8a), the mold optionally encircling the perimeter of the glazing (1a to 1d, 1'a to 1'd).

21. Process for manufacturing a multiple glazing with variable liquid-crystal-induced scattering according to one of the preceding process claims, **characterized in that** it comprises an immobilization of the first electrical cable (9) or even of an optional second electrical cable (9') preferably including an insertion of the support material (611, 62) on the first cable and in the mold (110'), the heating fluidizing the polymer support material, in particular made of EVA, so that the support material adopts the molding surface and solidifies the first electrical cable.

22. Process for manufacturing a multiple glazing with variable liquid-crystal-induced scattering according to one of the preceding process claims, **characterized in that** it comprises a formation of the seal (60) that is impermeable to liquid water, or even to steam, outside of the sealing gasket (6) preferably including an insertion into the mold (110, 110', 120) of the water-impermeable material (610, 611, 62), of the first cabling input (91), of the first electrode (3), of the optional first current feed (31), or even of the second cabling input (91'), of the second electrode (3'), of the optional second current feed (31'), the heating fluidizing the impermeable polymer material, in particular made of EVA, so that the support material adopts the molding surface and adheres to the glass.

23. Process for manufacturing a multiple glazing with variable liquid-crystal-induced scattering according to the preceding claim, **characterized in that** the mold (110, 110', 120) comprising the support material is open or pierced with one or more holes (111) on its wall opposite the edge face (1c, 1'c) of the glazing so as to let the first cable (91) exit and/or the mold (110) is open on at least one side so as to let the cabling exit.

24. Process for manufacturing a multiple glazing with variable liquid-crystal-induced scattering according to one of the preceding process claims, **characterized in that** the electrical insulation, the immobilization of the first cable (91) and/or the formation of the impermeable seal (60), in particular with the mold (110, 110', 120), comprises a step of simultaneous heating and preferably starting from a single material (61 to 61"'), preferably made of EVA.
